# EUROPEAN PATENT APPLICATION

(11) **EP 4 794 437 A1**
(43) Date of publication of application: **19.08.2026**
(21) Application number: 24887555.1
(22) Date of filing: 21.08.2024
(51) Int. Cl.: H04W 74/00

(54) **RANDOM ACCESS METHOD AND COMMUNICATION APPARATUS**

(30) Priority: 07.11.2023 CN 202311480209
(71) Applicant: HUAWEI TECHNOLOGIES CO., LTD., Shenzhen, Guangdong 518129 (CN)
(72) Inventor: HOU, Hailong, Shenzhen, Guangdong 518129 (CN); GUO, Zhiheng, Shenzhen, Guangdong 518129 (CN); LU, Shaozhong, Shenzhen, Guangdong 518129 (CN); SONG, Xinghua, Shenzhen, Guangdong 518129 (CN)
(74) Representative: Pfenning, Meinig & Partner mbB
(86) International application number: PCT/CN2024/113665
(87) International publication number: WO 2025/097935

(57) **Abstract**

A random access method and a communication apparatus are provided. The method includes: A network device sends first resource information and second resource information; and a terminal device determines a third random access resource based on the first resource information and the second resource information, and sends a random access preamble to the network device by using the third random access resource. The first resource information indicates a first random access resource set, and the second resource information indicates a second random access resource set. A time domain resource corresponding to the first random access resource set is an SBFD time unit, and a time domain resource corresponding to the second random access resource set is a non-SBFD time unit. The third random access resource belongs to either the first random access resource set or the second random access resource set. This method enables all ROs in the SBFD time unit to be usable while maximizing RO capacity in the non-SBFD time unit, thereby improving resource utilization.

## Description

### CROSS-REFERENCE TO RELATED APPLICATIONS

This application claims priority to Chinese Patent Application No. 202311480209.8, filed with the China National Intellectual Property Administration on November 7, 2023 and entitled "RANDOM ACCESS METHOD AND COMMUNICATION APPARATUS", which is incorporated herein by reference in its entirety.

### TECHNICAL FIELD

This application relates to the field of energy charging technologies, and in particular, to a random access method and a communication apparatus.

### BACKGROUND

It has recently been proposed that physical random access channel (physical random access channel, PRACH) transmission can be performed in a subband full duplex (subband full duplex, SBFD) time unit. However, because the available uplink bandwidth in an SBFD time unit is less than that in a non-SBFD (non-SBFD) time unit, the conventional approach of configuring PRACH resources without distinguishing between the SBFD time unit and the non-SBFD time unit may cause the configured PRACH resources to be unavailable or have limited capacity.

### SUMMARY

This application provides a random access method and a communication apparatus to improve PRACH resource utilization.

To achieve the foregoing objectives, the following technical solutions are used in embodiments of this application.

According to a first aspect, an embodiment of this application provides a random access method. The method may be performed by a first communication apparatus. The first communication apparatus may be a terminal device, or the first communication apparatus is a component configured to implement a function of a terminal device. For example, the first communication apparatus is a unit/module, a circuit, or a chip inside the terminal device. The following describes the method provided in the first aspect by using an example in which the first communication apparatus is the terminal device.

The random access method includes: The terminal device receives first resource information and second resource information, determines a third random access resource based on the first resource information and the second resource information, and sends a random access preamble by using the third random access resource. The first resource information indicates a first random access resource set, and the second resource information indicates a second random access resource set. A time domain resource corresponding to the first random access resource set is an SBFD time unit. A time domain resource corresponding to the second random access resource set is a non-SBFD time unit. The third random access resource belongs to either the first random access resource set or the second random access resource set.

In the method, a dedicated PRACH resource is independently configured for each of an SBFD time unit and a non-SBFD time unit, that is, a set of PRACH resources is configured for the SBFD time unit, and a set of PRACH resources is configured for the non-SBFD time unit. Compared with a method of configuring a set of PRACH resources for the SBFD time unit or the non-SBFD time unit, this method can make all ROs in the SBFD time unit available, and can also maximize RO capacity in the non-SBFD time unit, thereby improving resource utilization.

In a possible implementation, the terminal device determines the third random access resource based on the first resource information and the second resource information in Manner A to Manner D below. The terminal device may determine the third random access resource in any one of Manner A to Manner D.

**Manner A:** When received power of at least one reference signal in a first reference signal set is greater than or equal to a corresponding threshold, the terminal device determines the third random access resource from the first random access resource set; or when received power of any reference signal in a first reference signal set is less than a corresponding threshold, the terminal device determines the third random access resource from the second random access resource set. The first reference signal set is associated with either the first random access resource set or the second random access resource set.

In Manner A, when the received power of the at least one reference signal is greater than or equal to the corresponding threshold, it indicates that the terminal device is in an area with good cell coverage, and performance of transmission between the terminal device and a network device is good. In this case, the terminal device may select a resource in the first random access resource set to send the random access preamble. Even if PRACH transmission using a resource in the first random access resource set is subject to cross-link interference, impact on random access preamble transmission is not great, and a high random access success rate can still be ensured. On the contrary, when the received power of the one or more reference signals is less than the corresponding threshold, it indicates that the terminal device is in an area with poor cell coverage, and performance of transmission between the terminal device and a network device is poor. In this case, because there is no cross-link interference in the non-SBFD time unit, performance of PRACH transmission using a resource in the second random access resource set is good. Correspondingly, the terminal device may select a resource in the second random access resource set to send the random access preamble, thereby increasing a random access success rate.

**Manner B:** When received power of at least one reference signal in a first reference signal set is greater than or equal to a corresponding threshold, the terminal device determines the third random access resource from either the first random access resource set or the second random access resource set; or when received power of any reference signal in a first reference signal set is less than a corresponding threshold, the terminal device determines the third random access resource from the second random access resource set. The first reference signal set is associated with the first random access resource set and/or the second random access resource set.

When performance of transmission between the terminal device and a network device is poor, the terminal device selects a resource in the first random access resource set to send the random access preamble, so that a high random access success rate can be ensured. When performance of transmission between the terminal device and a network device is good, even if the terminal device selects a resource in the second random access resource set to send the random access preamble, a high random access success rate can still be ensured. Therefore, when the received power of the at least one reference signal is greater than or equal to the corresponding threshold, the terminal device may select the third random access resource from the first random access resource set, or may select the third random access resource from the second random access resource set, thereby making implementation of the network device flexible.

Based on Manner A and Manner B, the method further includes: The terminal device selects a first reference signal from the first reference signal set.

That the terminal device determines the third random access resource from the first random access resource set includes: The terminal device determines the third random access resource from a random access resource corresponding to the first reference signal in the first random access resource set.

That the terminal device determines the third random access resource from the second random access resource set includes: The terminal device determines the third random access resource from a random access resource corresponding to the first reference signal in the second random access resource set.

In Manner A and Manner B, the terminal device preferentially determines a to-be-used random access resource set, and then determines the third random access resource in the determined random access resource set based on the first reference signal. It should be noted that determining the to-be-used random access resource set by the terminal device and selecting the first reference signal by the terminal device from the first reference signal set are two independent processes.

**Manner C:** The terminal device selects a second reference signal from a first reference signal set; and when received power of the second reference signal is greater than or equal to a threshold corresponding to the second reference signal, the terminal device determines the third random access resource from a random access resource corresponding to the second reference signal in the first random access resource set; or when received power of the second reference signal is less than a threshold corresponding to the second reference signal, the terminal device determines the third random access resource from a random access resource corresponding to the second reference signal in the second random access resource set. The first reference signal set is associated with the first random access resource set and/or the second random access resource set.

A difference from Manner A lies in that in Manner C, the terminal device preferentially selects the second reference signal, then selects a to-be-used random access resource set based on the second reference signal, and determines the third random access resource from a random access resource corresponding to the second reference signal in the to-be-used random access resource set. When the received power of the second reference signal is greater than or equal to the threshold corresponding to the second reference signal, it indicates that the terminal device is in an area with good cell coverage, and performance of transmission between the terminal device and a network device is good. In this case, the terminal device determines the third random access resource from the random access resource corresponding to the second reference signal in the first random access resource set. Even if cross-link interference exists, a high random access success rate can still be ensured. On the contrary, when the received power of the second reference signal is less than the threshold corresponding to the second reference signal, it indicates that the terminal device is in an area with poor cell coverage, and performance of transmission between the terminal device and a network device is poor. In this case, the terminal device determines the third random access resource from the random access resource corresponding to the second reference signal in the second random access resource set with relatively good transmission performance, thereby increasing a random access success rate.

**Manner D:** The terminal device selects a second reference signal from a first reference signal set; and when received power of the second reference signal is greater than or equal to a threshold corresponding to the second reference signal, the terminal device determines the third random access resource from a random access resource corresponding to the second reference signal in either the first random access resource set or the second random access resource set; or when received power of the second reference signal is less than a threshold corresponding to the second reference signal, the terminal device determines the third random access resource from a random access resource corresponding to the second reference signal in the second random access resource set, where the first reference signal set is associated with the first random access resource set and/or the second random access resource set.

A difference from Manner C lies in that when the received power of the second reference signal is greater than or equal to the threshold corresponding to the second reference signal, the terminal device may use either the first random access resource set or the second random access resource set, thereby increasing a random access success rate and making implementation of a network device flexible.

In an implementation, the method further includes: The terminal device receives first indication information, where the first indication information indicates Y thresholds, the Y thresholds have an association relationship with X reference signals in a first reference signal set, X is a positive integer, Y is a positive integer, and 1≤Y≤X; or the first indication information indicates an association relationship between X reference signals in a first reference signal set and Y thresholds, X is a positive integer, Y is a positive integer, and 1≤Y≤X.

In the method, one reference signal may correspond to one threshold. In Manner A to Manner D above, for each reference signal, the terminal device compares received power of the reference signal with a threshold corresponding to the reference signal. Different thresholds are associated with different reference signals. In this way, when power of cross-link interference that exists when PRACHs are received in different beam directions is different, the terminal device can select a random access resource with better performance to perform PRACH transmission, to ensure a random access success rate of the terminal device.

In an implementation, the method further includes: The terminal device receives second indication information, where the second indication information indicates that the third random access resource belongs to either the first random access resource set or the second random access resource set.

In the method, the network device may indicate a to-be-used random access resource set to the terminal device, so that processing complexity of the terminal device can be reduced.

In an implementation, the second indication information is carried in a first field included in downlink control information (downlink control information, DCI), where when the first field has a first value, the second indication information indicates that the third random access resource belongs to the first random access resource set; or when the first field has a second value, the second indication information indicates that the third random access resource belongs to the second random access resource set.

In an implementation, the DCI further includes a random access preamble index indicator field, and the random access preamble index indicator field has not all values of 0.

In an implementation, the first resource information includes a frequency start position of a lowest random access channel occasion (RACH occasion, RO) in the frequency domain in the first random access resource set and/or a quantity of frequency division multiplexing ROs in the first random access resource set; and the second resource information includes a frequency start position of a lowest RO in the frequency domain in the second random access resource set and/or a quantity of frequency division multiplexing ROs in the second random access resource set.

In an implementation, the first resource information includes a first PRACH configuration index, where the first PRACH configuration index and a random access (random access, RA) configuration table for time division duplex (time division duplex, TDD) spectrum are used to determine a first time domain resource; or the first PRACH configuration index and an RA configuration table for frequency division duplex (frequency division duplex, FDD) spectrum are used to determine the time domain resource corresponding to the first random access set; and the second resource information includes a second PRACH configuration index, where the second PRACH configuration index and the RA configuration table for TDD spectrum are used to determine the time domain resource corresponding to the second random access set.

In an implementation, the first resource information further includes first power information, and the first power information indicates information related to transmit power control for a random access preamble in the first random access resource set; and the second resource information further includes second power information, and the second power information indicates information related to transmit power control for a random access preamble in the second random access resource set. The information related to transmit power for the random access preamble includes expected received power and/or a power ramping step.

According to a second aspect, an embodiment of this application provides a random access method. The method may be performed by a second communication apparatus. The second communication apparatus may be a network device, or the second communication apparatus is a component configured to implement a function of a network device. For example, the second communication apparatus is a unit/module, a circuit, or a chip inside the network device. The following describes the method provided in the second aspect by using an example in which the second communication apparatus is the network device.

The random access method includes: The network device sends first resource information and second resource information, and detects a random access preamble in a first random access resource set and/or a second random access resource set. The first resource information indicates the first random access resource set, and the second resource information indicates the second random access resource set. A time domain resource corresponding to the first random access resource set is an SBFD time unit. A time domain resource corresponding to the second random access resource set is a non-SBFD time unit.

In an implementation, the method further includes: The network device sends first indication information, where the first indication information indicates Y thresholds, the Y thresholds have an association relationship with X reference signals in a first reference signal set, X is a positive integer, Y is a positive integer, and 1≤Y≤X; or the first indication information indicates an association relationship between X reference signals in a first reference signal set and Y thresholds, X is a positive integer, Y is a positive integer, and 1≤Y≤X. The first reference signal set is associated with the first random access resource set and/or the second random access resource set.

In an implementation, the method further includes: The network device sends second indication information, where the second indication information indicates that a third random access resource belongs to either the first random access resource set or the second random access resource set.

In an implementation, the first resource information includes a frequency start position of a lowest RO in the frequency domain in the first random access resource set and/or a quantity of frequency division multiplexing ROs in the first random access resource set; and the second resource information includes a frequency start position of a lowest RO in the frequency domain in the second random access resource set and/or a quantity of frequency division multiplexing ROs in the second random access resource set.

In an implementation, the first resource information includes a first PRACH configuration index, where the first PRACH configuration index and an RA configuration table for TDD spectrum are used to determine a first time domain resource; or the first PRACH configuration index and an RA configuration table for FDD spectrum are used to determine a first time domain resource corresponding to the first random access resource set; and the second resource information includes a second PRACH configuration index, where the second PRACH configuration index and the RA configuration table for TDD spectrum are used to determine the time domain resource corresponding to the second random access resource set.

In an implementation, the first resource information further includes first power information, and the first power information indicates information related to transmit power control for a random access preamble in the first random access resource set; and the second resource information further includes second power information, and the second power information indicates information related to transmit power control for a random access preamble in the second random access resource set. The information related to transmit power for the random access preamble includes expected received power and/or a power ramping step.

For beneficial effects of the second aspect and implementations of the second aspect, refer to descriptions of beneficial effects of the first aspect and any implementation of the first aspect.

According to a third aspect, an embodiment of this application provides a communication apparatus. The communication apparatus has a function of implementing behavior in the method instance according to the first aspect or the second aspect. For beneficial effects, refer to related descriptions of the first aspect or the second aspect. Details are not described herein again. For example, the communication apparatus may be the terminal device in the first aspect, or the communication apparatus may be the network device in the second aspect. For another example, the communication apparatus may be an apparatus that can support a terminal device in implementing a function required by the method provided in the first aspect. For example, the communication apparatus may be a chip or a chip system in the terminal device. Alternatively, the communication apparatus may be an apparatus that can support a network device in implementing a function required by the method provided in the second aspect. For example, the communication apparatus may be a chip or a chip system in the network device.

In a possible design, the communication apparatus includes a baseband apparatus and a radio frequency apparatus.

In a possible design, the communication apparatus includes a corresponding means (means) or module configured to perform the method according to the first aspect or the second aspect. For example, the communication apparatus includes a processing unit (sometimes also referred to as a processing module or a processor) and/or a transceiver unit (sometimes also referred to as a transceiver module or a transceiver). The transceiver unit can implement a sending function and a receiving function. When the transceiver unit implements the sending function, the transceiver unit may be referred to as a sending unit (sometimes also referred to as a sending module). When the transceiver unit implements the receiving function, the transceiver unit may be referred to as a receiving unit (sometimes also referred to as a receiving module). The sending unit and the receiving unit may be a same functional unit, the functional unit is referred to as the transceiver unit, and the functional unit can implement the sending function and the receiving function. Alternatively, the sending unit and the receiving unit may be different functional units, and the transceiver unit is a general term for these functional units. These units (modules) may perform corresponding functions in the method example according to the first aspect or the second aspect. For details, refer to detailed descriptions in the method example. Details are not described herein again.

According to a fourth aspect, an embodiment of this application provides a communication apparatus. The communication apparatus may be the communication apparatus in the third aspect of the foregoing embodiments, or may be a chip or a chip system disposed in the communication apparatus in the third aspect. The communication apparatus includes a communication interface and a processor, and optionally, further includes a memory. The memory is configured to store a computer program, instructions, or data, and the processor is coupled to the memory and the communication interface. When the processor reads the computer program, the instructions, or the data, the communication apparatus is enabled to perform the method performed by the terminal device in the foregoing method embodiment. For example, the communication apparatus may be a terminal device or a functional module in a terminal device, for example, a baseband chip and a radio frequency chip. Alternatively, when the processor reads the computer program, the instructions, or the data, the communication apparatus is enabled to perform the method performed by the network device in the foregoing method embodiment. For example, the communication apparatus may be a network device or a functional module in a network device, for example, a baseband chip and a radio frequency chip.

According to a fifth aspect, an embodiment of this application provides a chip system. The chip system includes a processor, and may further include a communication interface, to implement the method according to either the first aspect or the second aspect. Optionally, the chip system further includes a memory. The memory is configured to store a computer program (which may also be referred to as code or instructions). The processor is configured to invoke the computer program from the memory and run the computer program, so that a device in which the chip system is installed performs the method according to the first aspect and any possible implementation of the first aspect, or a device in which the chip system is installed performs the method according to the second aspect and any possible implementation of the second aspect. The chip system may include a chip, or may include a chip and another discrete component.

According to a sixth aspect, an embodiment of this application provides a communication apparatus. The communication apparatus includes an input/output interface and a logic circuit. The input/output interface is configured to input and/or output information. The input/output interface may be an interface circuit, an output circuit, an input circuit, a pin, a related circuit, or the like. The logic circuit is configured to perform the method according to either the first aspect or the second aspect.

In a specific implementation process, the communication apparatus may be a chip, the input circuit may be an input pin, the output circuit may be an output pin, and the logic circuit may be a transistor, a gate circuit, a trigger, any logic circuit, or the like. An input signal received by the input circuit may be received and input by, for example, but not limited to, a receiver, and a signal that is output by the output circuit may be output to, for example, but not limited to, a transmitter and transmitted by the transmitter. In addition, the input circuit and the output circuit may be a same circuit. The circuit is used as the input circuit and the output circuit at different moments. Specific implementations of the input/output interface and the logic circuit are not limited in this application.

In an implementation, when the communication apparatus is a wireless communication device, the wireless communication device may be a terminal device, for example, a mobile phone. The interface circuit may be a radio frequency processing chip in the wireless communication device, and a processing circuit may be a baseband processing chip in the wireless communication device.

According to a seventh aspect, an embodiment of this application provides a communication system. The communication system includes a terminal device and a network device. The terminal device is configured to implement a function of the method according to the first aspect, and the network device is configured to implement a function of the method according to the second aspect.

According to an eighth aspect, an embodiment of this application provides a computer-readable storage medium. The computer-readable storage medium is configured to store a computer program or instructions, and when the computer program or the instructions are run, the method according to the first aspect and any possible implementation of the first aspect is implemented, or the method according to the second aspect and any possible implementation of the second aspect is implemented.

According to a ninth aspect, an embodiment of this application further provides a computer program product including instructions. When the computer program product runs on a computer, the method according to the first aspect and any possible implementation of the first aspect is implemented, or the method according to the second aspect and any possible implementation of the second aspect is implemented.

For beneficial effects of the third aspect to the ninth aspect and the implementations of the third aspect to the ninth aspect, refer to descriptions of beneficial effects of the first aspect and the second aspect and any possible implementation of the first aspect and the second aspect.

### BRIEF DESCRIPTION OF DRAWINGS

FIG. 1 is a diagram of an uplink and a downlink in a TDD system according to an embodiment of this application;
FIG. 2 is a diagram of SBFD according to an embodiment of this application;
FIG. 3 is another diagram of SBFD according to an embodiment of this application;
FIG. 4 is a diagram of CLI between terminal devices according to an embodiment of this application;
FIG. 5 is a diagram in which an SSB is associated with an RO according to an embodiment of this application;
FIG. 6 is a diagram of configuring an RO based on a non-SBFD time unit according to an embodiment of this application;
FIG. 7 is a diagram of configuring an RO based on an SBFD time unit according to an embodiment of this application;
FIG. 8 is a diagram of a communication system according to an embodiment of this application;
FIG. 9 is a schematic flowchart of a random access method according to an embodiment of this application;
FIG. 10 is a diagram of respective dedicated ROs of an SBFD time unit and a non-SBFD time unit according to an embodiment of this application;
FIG. 11 is another diagram of respective dedicated ROs of an SBFD time unit and a non-SBFD time unit according to an embodiment of this application;
FIG. 12 is still another diagram of respective dedicated ROs of an SBFD time unit and a non-SBFD time unit according to an embodiment of this application;
FIG. 13 is a diagram of a mapping relationship between a reference signal and a signal strength threshold according to an embodiment of this application;
FIG. 14 is a diagram of a structure of a communication apparatus according to an embodiment of this application; and
FIG. 15 is a diagram of another structure of a communication apparatus according to an embodiment of this application.

### DESCRIPTION OF EMBODIMENTS

According to methods provided in embodiments of this application, a dedicated PRACH resource is independently configured for each of an SBFD time unit and a non-SBFD time unit, that is, a set of PRACH resources is configured for the SBFD time unit, and a set of PRACH resources is configured for the non-SBFD time unit. Compared with a method of configuring a PRACH resource for the SBFD time unit or the non-SBFD time unit, this method can make all ROs in the SBFD time unit available, and can also resolve a problem that RO capacity in the non-SBFD time unit is limited, thereby improving resource utilization. With reference to the accompanying drawings, the following further describes the solutions provided in embodiments of this application.

Some terminologies in embodiments of this application are first described, to facilitate understanding of embodiments of this application.

### (1) Network device

The network device in embodiments of this application is mainly an access network device. Therefore, in the following descriptions, unless otherwise specified, the "network device" is a radio access network (radio access network, RAN) device, and may be briefly referred to as an access network device. The RAN may be a cellular system related to the 3rd generation partnership project (3rd generation partnership project, 3GPP), for example, a 5G mobile communication system or a future-oriented evolved system (for example, a 6G mobile communication system). Alternatively, the RAN may be an open access network (open RAN, O-RAN, or ORAN), a cloud radio access network (cloud radio access network, CRAN), a virtualized radio access network (virtualized RAN, vRAN), or the like. Alternatively, the RAN may be a communication system that integrates two or more of the foregoing systems. The RAN device may also be referred to as a RAN node, a RAN entity, an access node, or the like.

In a possible scenario, the RAN node may be a base station (base station), an evolved NodeB (evolved NodeB, eNodeB), an access point (access point, AP), a transmission reception point (transmission reception point, TRP), a next generation NodeB (next generation NodeB, gNB), a next generation base station in a 6G mobile communication system, a base station in a future mobile communication system, or the like. The RAN node may be a macro base station, a micro base station, an indoor base station, a relay node, a donor node/host node, a radio controller, or the like. Alternatively, the RAN node may be a server, a wearable device, a vehicle, a vehicle-mounted device, or the like. For example, a RAN node in a vehicle to everything (vehicle to everything, V2X) technology may be a roadside unit (roadside unit, RSU).

In another possible scenario, the RAN node may be a module or unit that completes some functions of a base station; or a plurality of RAN nodes cooperate to assist a terminal device in implementing radio access, and different RAN nodes separately implement some functions of a base station. For example, the RAN node may be a central unit (central unit, CU), a distributed unit (distributed unit, DU), or a radio unit (radio unit, RU). Functions of the CU may be implemented by one entity, or may be implemented by different entities. For example, the functions of the CU may be further divided, that is, a control plane and a user plane are separated and implemented by different entities, which are respectively a control plane CU entity (namely, a CU-control plane (control plane, CP) entity) and a user plane CU entity (namely, a CU-user plane (user plane, UP) entity). The CU-CP entity and the CU-UP entity may be coupled to the DU, to jointly complete functions of the RAN node. The CU and the DU may be separately disposed, or may be included in a same network element, for example, a baseband unit (baseband unit, BBU).

In different systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP and the CU-UP), the DU, and the RU in this application may be implemented by using a software module, a hardware module, or a combination of a software module and a hardware module.

The CU and the DU may be configured based on protocol layer functions of a wireless network implemented by the CU and the DU. For example, the CU is configured to implement functions of a packet data convergence protocol (packet data convergence protocol, PDCP) layer and a protocol layer (for example, a radio resource control (radio resource control, RRC) layer and/or a service data adaptation protocol (service data adaptation protocol, SDAP) layer) above the PDCP layer. The DU is configured to implement a function of a protocol layer (for example, a radio link control (radio link control, RLC) layer, a media access control (media access control, MAC) layer, and/or a physical (physical, PHY) layer) below the PDCP layer. For another example, the CU is configured to implement a function of a protocol layer (for example, an RRC layer and/or an SDAP layer) above a PDCP layer, and the DU is configured to implement functions of the PDCP layer and a protocol layer (for example, an RLC layer, a MAC layer, and/or a PHY layer) below the PDCP layer. For specific descriptions of the foregoing protocol layers, refer to a related technical specification of the 3GPP or a technical specification of another applicable communication protocol. Division into processing functions of the CU and the DU based on the protocol layers is merely an example. Division may alternatively be performed in another manner. This is not limited in this application. For example, in a design, the CU or the DU may alternatively have some processing functions of a protocol layer through division. In a design, some functions of the RLC layer and a function of a protocol layer above the RLC layer are set on the CU, and a remaining function of the RLC layer and a function of a protocol layer below the RLC layer are set on the DU.

In embodiments of this application, an apparatus configured to implement a function of the network device may be the network device, or may be an apparatus that can support the network device in implementing the function, for example, a chip system or a combined device or component that can implement the function of the network device. The apparatus may be installed in the network device. A specific technology and a specific device form that are used by the network device are not limited in embodiments of this application.

### (2) Terminal device

In embodiments of this application, any device that can perform data communication with a base station may be considered as the terminal device. The terminal device is also referred to as a terminal, a terminal apparatus, user equipment (user equipment, UE), a mobile station, a mobile terminal, or the like. The terminal device may be widely used in various scenarios, for example, device to device (device to device, D2D) communication, V2X communication, machine type communication (machine type communication, MTC), internet of things (internet of things, IoT), virtual reality (virtual reality, VR), augmented reality (augmented reality, AR), industrial control, autonomous driving, telemedicine, smart grid, smart furniture, smart office, smart wearables, smart transportation, or smart city. For example, the terminal device may be a mobile phone, a computer, a mobile internet device (mobile internet device, MID), a wearable device, a VR device, an AR device, a station (station, STA), a robot arm, a camera, a robot, a smart home device (for example, a television, an air conditioner, a robot vacuum, a sound box, or a set-top box), a relay (relay), or customer premise equipment (customer premise equipment, CPE).

If the various terminal devices described above are located on a vehicle (for example, placed/mounted in the vehicle), the terminal devices may be all considered as vehicle-mounted terminal devices. The vehicle-mounted terminal device may be a vehicle-mounted module, a vehicle-mounted assembly, a vehicle-mounted component, a vehicle-mounted chip, or an on-board unit that is built in a vehicle as one or more components or units. The vehicle may implement the methods in this application through the built-in vehicle-mounted module, vehicle-mounted assembly, vehicle-mounted component, vehicle-mounted chip, or on-board unit. The vehicle-mounted terminal device may be an entire vehicle device, a vehicle-mounted module, a vehicle, an on-board unit (on-board unit, OBU), a roadside unit (roadside unit, RSU), an in-vehicle infotainment system (also referred to as an in-vehicle sending unit) (telematics box, T-box), a chip, a system on chip (system on chip, SoC), or the like. The chip or the SoC may be installed in the vehicle, the OBU, the RSU, or the T-box.

In embodiments of this application, an apparatus configured to implement a function of the terminal device may be the terminal device, or may be an apparatus that can support the terminal device in implementing the function, for example, a chip system or a combined device or component that can implement the function of the terminal device. The apparatus may be installed in the terminal device. A specific technology and a specific device form that are used by the terminal device are not limited in embodiments of this application.

### (3) SBFD

The SBFD mechanism is proposed for TDD to reduce an uplink (uplink, UL) delay, improve uplink coverage, and the like. In a TDD system, a downlink (downlink, DL) usually occupies more time domain resources than an uplink, causing coverage imbalance between the downlink and the uplink. It may be understood that the uplink and the downlink are relative. If the uplink is from a network device to a terminal device, the downlink is from the terminal device to the network device. If the downlink is from a network device to a terminal device, the uplink is from the terminal device to the network device (this is used as an example in this specification).

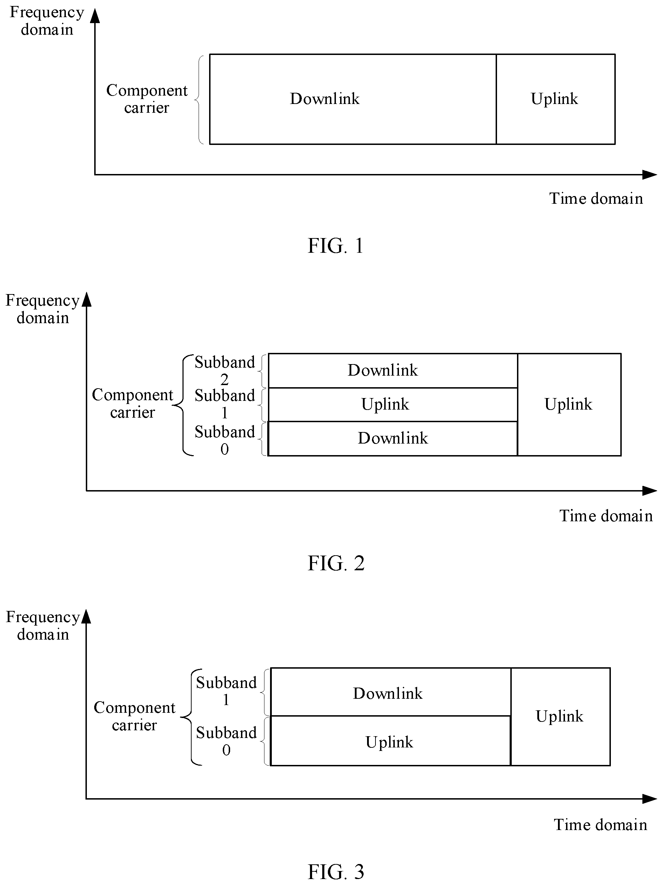

For example, FIG. 1 is a diagram of an uplink and a downlink in a TDD system. In FIG. 1, an example in which a frequency domain resource is a component carrier (component carriers, CC) is used. It can be learned from FIG. 1 that the downlink occupies more time domain resources than the uplink. For the uplink, there are few available resources, poor coverage, and a long delay.

To resolve the long delay and poor coverage of the uplink in the TDD system, an SBFD mechanism is proposed. In an SBFD system, a frequency domain resource on which a CC is located may be divided into a plurality of subbands. Transmission directions of different subbands in the plurality of subbands may be the same or different. In other words, a network device may simultaneously send and receive signals on a same time domain resource. This is equivalent to that a resource available for uplink transmission is increased on the CC, so that uplink coverage performance can be enhanced, and an uplink delay can be reduced.

For example, FIG. 2 is a diagram of SBFD. In FIG. 2, an example in which a frequency domain resource is a CC is used. As shown in FIG. 2, the CC may be divided into three subbands, and the three subbands are a subband 0, a subband 1, and a subband 2. Transmission directions of different subbands may be different. In FIG. 2, an example in which the subband 1 in the three subbands has an uplink transmission direction and the subband 0 and the subband 2 have downlink transmission directions is used. It can be learned from FIG. 2 that an uplink transmission resource available to a terminal device can be increased by using the SBFD, so that uplink coverage can be effectively improved, and an uplink delay can be reduced.

For another example, FIG. 3 is another diagram of SBFD. In FIG. 3, an example in which a frequency domain resource is a CC is used. As shown in FIG. 3, the CC may be divided into two subbands, and the two subbands are a subband 0 and a subband 1. The subband 0 has an uplink transmission direction, and the subband 1 has a downlink transmission direction. It can be learned from FIG. 3 that an uplink transmission resource available to a terminal device can be increased by using the SBFD, so that uplink coverage can be effectively improved, and an uplink delay can be reduced.

### (4) Cross-link interference (cross-link interference, CLI)

When a plurality of terminal devices simultaneously perform uplink transmission and downlink transmission on a plurality of subbands, uplink transmission and downlink transmission interfere with each other, that is, CLI between network devices and CLI between terminal devices are caused.

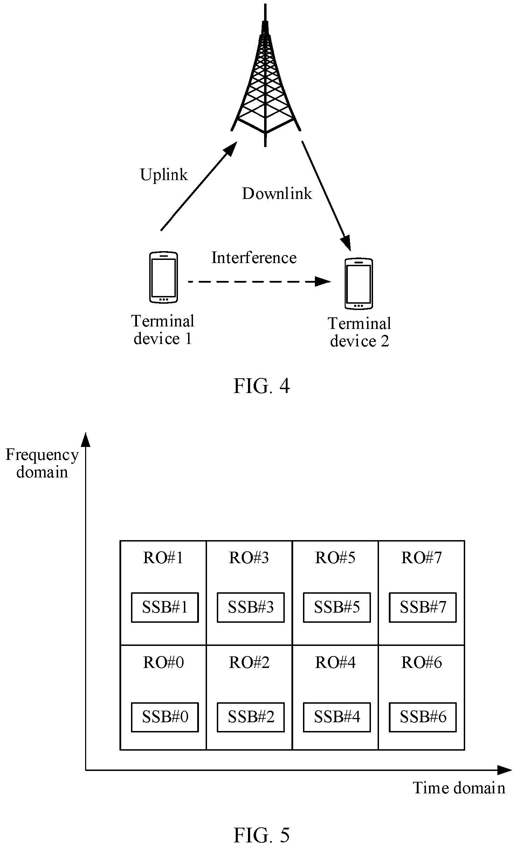

For example, FIG. 4 is a diagram of CLI between terminal devices. In FIG. 4, an example in which there is one network device and two terminal devices are used. The two terminal devices are a terminal device 1 and a terminal device 2. With reference to FIG. 2, it is assumed that the network device sends a downlink signal to the terminal device 2 in the subband 0 and/or the subband 2, and the terminal device 1 sends an uplink signal to the network device in the subband 1. Because the terminal device 2 receives the downlink signal from the network device, and may receive the uplink signal from the terminal device 1, for the terminal device 2, the uplink signal sent by the terminal device 1 may be an interference signal (shown by a dashed line in FIG. 4). CLI caused by the terminal device 1 to the terminal device 2 mainly includes interference caused by leakage of the uplink signal of the terminal device 1 in the subband 1 to an adjacent subband (namely, a subband in which a signal from the network device is located).

### (5) Random access procedure

The random access procedure includes a 4-step random access procedure (also referred to as a Type-1 RA procedure) and a 2-step random access procedure (also referred to as a Type-2 RA procedure). Based on whether a conflict occurs during preamble transmission among terminal devices, the random access procedure is further classified into contention-based random access (contention-based random access, CBRA) and contention free random access (contention free random access, CFRA). Compared with the contention-based random access procedure, the contention free random access procedure makes a network device send preamble allocation information to a terminal device. Since a preamble is allocated by the network device, the terminal device does not need to perform autonomous selection, thereby avoiding contention with other terminal devices.

The contention-based random access procedure mainly includes four steps, and is also referred to as the 4-step random access procedure. The 4-step random access procedure involves four types of random access messages, namely a random access message 1 to a random access message 4. The random access message 1 is a random access preamble, and may be referred to as a message 1 (message 1, Msg1). The random access message 2 is a response message of the random access message 1, is also referred to as a random access response (random access response, RAR), and may be referred to as a message 2 (Msg2). The random access message 3 and the random access message 4 are used in the contention-based access mechanism to resolve contention. The random access message 3 is also referred to as Msg3, and the random access message 4 is also referred to as a conflict resolution message/contention resolution message/Msg4.

During 4-step random access, a terminal device sends a preamble (preamble, that is, Msg1) through a PRACH. Before sending Msg1, the terminal device obtains a PRACH resource configuration by reading system broadcast information and determines a PRACH resource based on the configuration.

After sending Msg1, the terminal device starts a random access response window and listens for a RAR (namely, Msg2) from the network device within the response window. If the terminal device detects its own RAR, random access is successful. Subsequently, the terminal device sends Msg3 to the network device based on an indication of the RAR to send an RRC connection setup request. If the terminal device does not receive its own RAR, random access fails, and the terminal device re-initiates random access based on a backoff parameter indicated by the network device until the maximum quantity of random access attempts is reached.

After sending Msg3, the terminal device listens for Msg4 from the network device. Msg4 carries a conflict resolution identifier and an air interface parameter configuration for the terminal device. If the terminal device receives Msg4, random access is successful; otherwise, random access fails. If random access is successful, the terminal device may send Msg5 to the network device to send an RRC setup complete command. If random access fails, the terminal device re-initiates random access based on a backoff parameter indicated by the network device until a maximum quantity of random access attempts is reached.

The 2-step random access procedure involves two types of random access messages, namely a random access message A (MsgA for short) and a random access message B (MsgB for short). MsgA corresponds to the random access message 1 and the random access message 3 in the 4-step random access procedure, and MsgB corresponds to the random access message 2 and the random access message 4 in the 4-step random access procedure. For details, refer to the descriptions of the foregoing 4-step random access procedure. Details are not described herein again.

(6) PRACH resource: The PRACH resource includes a time domain resource, a frequency domain resource, a preamble sequence resource, and the like. A network device may configure a PRACH resource, including configuring a time domain resource, a frequency domain resource, a preamble sequence resource, power control information, and the like. The following describes a method for configuring or determining a time domain resource, a frequency domain resource, a preamble sequence resource, and power control information of a PRACH resource.

### (61) Time domain resource

Based on a frequency range (frequency range, FR) 1 or FR2 and a spectrum type, the 3GPP protocol specifies several random access configuration tables. The 3GPP protocol defines an RA configuration table for FR1 TDD spectrum, an RA configuration table for FR1 FDD spectrum, and an RA configuration table for FR2 TDD spectrum. Each table includes a plurality of rows, and each row includes parameters such as a PRACH configuration index (configuration index), a preamble format (preamble format), a period, an offset, a subframe number, a starting symbol, a quantity of PRACH slots within a subframe, a quantity of PRACH slots within a PRACH slot, and a PRACH duration. By way of example, Table 1 lists an RA configuration table for FR2 TDD spectrum.

The network device indicates a PRACH configuration index value by using higher-layer signaling prach-ConfigurationIndex or msgA-PRACH-ConfigurationIndex, to indicate which row of RA configuration parameters in the table is to be used, that is, to indicate a time domain resource of a PRACH resource.

**Table 1 Random access configurations for FR1 and unpaired spectrum**

| PRACH configuration index | Preambleformat | ***n***_{f} mod ***x***= ***y*** | | Subframenumber | Startingsymbol | Number ofPRACHslots withina subframe | ${N}_{t}^{RA , slot}$ ,number oftime-domainPRACHoccasionswithin aPRACH slot | ${N}_{dur}^{RA}$ , PRACH duration |
|---|---|---|---|---|---|---|---|---|
| | | x | y | | | | | |
| 0 | 0 | 16 | 1 | 9 | 0 | - | - | 0 |
| 1 | 0 | 8 | 1 | 9 | 0 | - | - | 0 |
| 2 | 0 | 4 | 1 | 9 | 0 | - | - | 0 |
| ... | | | | | | | | |
| ... | | | | | | | | |
| ... | | | | | | | | |
| 260 | 0 | 2 | 1 | 7 | 0 | - | - | 0 |
| 261 | 0 | 2 | 0 | 2 | 0 | - | - | 0 |
| PRACH configuration index | Preambleformat | ***n***_{f} mod ***x***= ***y*** | | Subframenumber | Startingsymbol | Number ofPRACHslots withina subframe | ${N}_{t}^{RA , slot}$ ,number oftime-domainPRACHoccasionswithin aPRACH slot | ${N}_{dur}^{RA}$ , PRACH duration |
| | | x | y | | | | | |
| 262 | 0 | 2 | 1 | 2 | 0 | - | - | 0 |

It may be understood that time domain configuration information in the RA configuration table for TDD spectrum is defined based on a typical TDD frame structure. Therefore, when the RA configuration table for TDD spectrum is applied to an SBFD system, an uplink transmission slot may not match an existing typical TDD frame structure.

### (62) Frequency domain resource

The frequency domain resource of the PRACH resource is mainly determined based on a higher-layer parameter msg1-FrequencyStart or msgA-RO-FrequencyStart, a higher layer msg1-FDM or msgA-RO-FDM, and the like. Here, msg1-FrequencyStart or msgA-RO-FrequencyStart indicates a frequency start position of an RO in Type-1 RA or Type-2 RA. msg1-FDM or msgA-RO-FDMt indicates a quantity of frequency division multiplexing (frequency division multiplexing, FDM) ROs in the Type-1 RA or the Type-2 RA. Currently, the frequency start position of an RO is a frequency position within the bandwidth part (bandwidth part, BWP) to which the PRACH resource belongs, that is, the frequency start position of the RO is a frequency offset relative to the frequency start position of the BWP. For example, the frequency start position of the BWP is a physical resource block (physical resource block, PRB) 0, and the frequency start position of the RO is an offset of a quantity of resource blocks (resource blocks, RBs) relative to the PRB 0.

### (63) Preamble sequence resource

The network device may configure parameters such as a preamble format, a root sequence index, a quantity of preambles supported per RO, a cyclic shift, a restricted set type, a subcarrier spacing, and group A/B related information, to indicate a preamble sequence resource configured for a terminal device.

In addition, the network device may configure a mapping relationship between an RO and an SSB and a quantity of preambles of each SSB on each RO by using a higher-layer parameter ssb-perRACH-OccasionAndCB-PreamblesPerSSB.

### (64) Power control information

The network device may configure PRACH transmit power by configuring higher-layer parameters such as preamble received target power and a power ramping step. The preamble received target power is used to configure the expected received power of a preamble, and the power ramping step is used to configure a power ramping value for PRACH retransmission.

### (7) Mapping relationship between an SSB and an RO

To enable data transmission between a terminal device and a network device, the terminal device establishes a connection to the network device through a random access procedure. To initiate the random access procedure, the terminal device may send a preamble to the network device. In NR, the multi-beam operation is introduced, and the random access procedure is performed based on a beam. For example, an NR system supports the network device in sending SSBs on a plurality of beams. For example, in FR1, the network device may support up to eight SSBs, that is, the network device may send eight SSBs to a terminal device. After receiving a plurality of SSBs from the network device, the terminal device may select one SSB from the plurality of SSBs and send a preamble based on the beam of the selected SSB. For example, the terminal device may select one SSB (for example, referred to as a first SSB) from the plurality of SSBs to send a PRACH.

To enable the network device to calculate an SSB used by the terminal device to send a PRACH, the mapping relationship between an SSB and an RO is specified. The network device may determine, by using an RO and/or a preamble sequence for sending a preamble by the terminal device, an SSB beam selected by the terminal device to send the preamble. The mapping relationship between an SSB and an RO is configured by the network device by using a higher-layer parameter, and the higher-layer parameter mainly includes "msg1-FDM" and "ssbperRACH-OccasionAndCB-PreamblesPerSSB". The parameter msg1-FDM mainly defines a time-frequency resource with a plurality of ROs, for example, P ROs, where P is an integer greater than or equal to 1. The parameter ssbperRACH-OccasionAndCB-PreamblesPerSSB mainly defines mapping (or association) of N SSBs to one RO, and mapping of R preambles to one SSB. For example, when N is less than 1, one SSB is mapped to 1/N ROs, and when N is greater than 1, N SSBs are mapped to one RO (or it may be considered that one SSB is mapped to 1/N ROs). For example, when N=1/2, one SSB is mapped to two ROs, and when N=2, two SSBs are mapped to one RO. In other words, one SSB may be mapped to one or more ROs, and a plurality of SSBs may also be mapped to one RO. Each SSB is mapped to a plurality of consecutive preambles on an RO associated with the SSB.

Currently, it is specified that a maximum of 64 preambles can be transmitted in one RO through code division multiplexing. However, because the network device may reserve some preambles in advance for use in a special procedure, the network device configures, by using a higher-layer parameter "totalNumberOfRA-Preambles", a maximum quantity of preambles that can be used in one RO. For example, the maximum quantity of preambles is less than 64. It may also be considered that a quantity of preambles used in one RO to distinguish between different types of terminal devices is less than 64 or even smaller. An SSB is mapped to an RO in the following order: First, mapping is performed in ascending order of preamble sequence numbers in one RO; then mapping is performed in ascending order of frequency domain resource indexes of at least one RO in the frequency domain multiplexing; next, mapping is performed in ascending order of time domain resource indexes of at least one RO in time division multiplexing within one PRACH slot; and finally mapping is performed in ascending order of PRACH slot indexes.

For example, a cell supports eight SSBs, each SSB is associated with one RO, and multiplexing of two ROs is supported in the frequency domain. In this case, a plurality of RO (ROs) resources in the cell are shown in FIG. 5.

(8) In various embodiments of this application, "when", "as if", and "if" all mean that an apparatus performs corresponding processing in an objective case, are not intended to limit time, do not require the apparatus to necessarily have a determining action during implementation, and do not mean another limitation. Unless otherwise specified, "if" and "as if" are interchangeable, and "when" and "in the case of" are interchangeable. In addition, "when" and "if"/"as if" are interchangeable. In embodiments of this application, the preamble may also be referred to as a random access request, a preamble, a preamble, a preamble carried on a PRACH, a RACH preamble, Msg1, MsgA, or the like. That the SSB is associated with the RO may also be understood as that there is a mapping relationship between the SSB and the RO. Unless otherwise specified, "the SSB is associated with the RO" and "the SSB is mapped to the RO" are interchangeable. Similarly, unless otherwise specified, "the SSB is associated with the preamble" and "the SSB is mapped to the preamble" are interchangeable.

In embodiments of this application, unless otherwise specified, a quantity of nouns represents "a singular noun or a plural noun", that is, "one or more". In addition, "at least one" means one or more, and "a plurality of" means two or more. Moreover, "and/or" describes an association relationship between associated objects, and represents that three relationships may exist. For example, A and/or B may represent the following cases: Only A exists, both A and B exist, and only B exists, where A and B may be singular or plural. A character "/" generally indicates an "or" relationship between the associated objects. For example, A/B indicates A or B. In addition, "at least one of the following items (pieces)" or a similar expression thereof means any combination of these items, including any combination of singular items (pieces) or plural items (pieces). For example, at least one of a, b, or c indicates a, b, c, a and b, a and c, b and c, or a, b, and c, where a, b, and c may be singular or plural.

Ordinal numbers such as "first" and "second" mentioned in embodiments of this application are intended to distinguish between a plurality of objects, but are not intended to limit sizes, content, a sequence, a time sequence, priorities, importance degrees, or the like of the plurality of objects. For example, a first random access resource set and a second random access resource set are two different random access resource sets, and do not indicate that content, priorities, importance degrees, or the like of the two random access resource sets are different. For a type of technical feature, technical features in the type of technical feature are distinguished by using "A", "B", "C", "D", and the like, and there is no sequence or magnitude order between the technical features described by "A", "B", "C", and "D". For example, Manner A and Manner B in this specification are merely intended to distinguish between different resource determining manners, and do not limit a sequence or a magnitude order, and priorities, importance degrees, or the like of Manner A and Manner B.

The foregoing describes some technical terms related to embodiments of this application, and the following describes some technical features related to embodiments of this application.

As described above, in an SBFD system, because an uplink available bandwidth in an SBFD time unit is less than an uplink available bandwidth in a non-SBFD (non-SBFD) time unit, if a PRACH resource is configured without distinguishing between the SBFD time unit and the non-SBFD time unit, for example, a frequency position of an RO and a quantity of multiplexing ROs are configured, a configured RO may be unavailable or RO capacity may be limited.

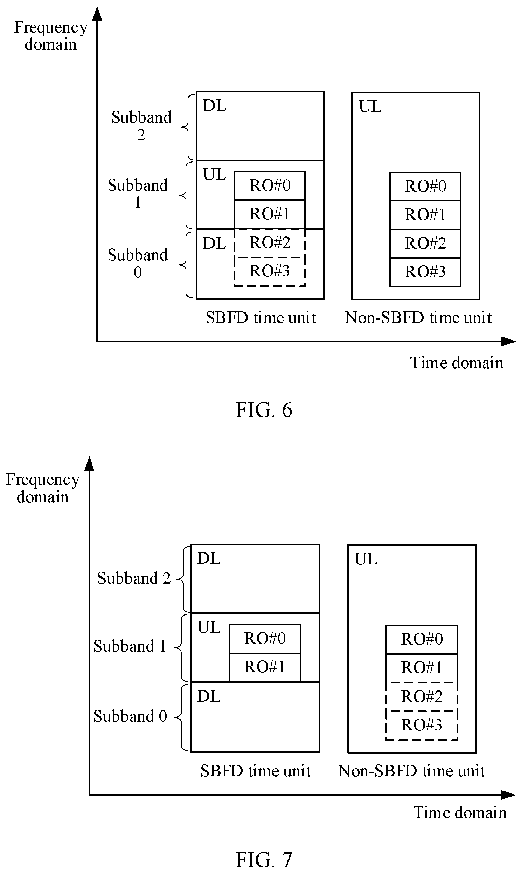

For example, FIG. 6 is a diagram of configuring an RO based on a non-SBFD time unit. In FIG. 6, a frequency domain resource A is used as an example. The frequency domain resource A is used for uplink transmission in the non-SBFD time unit. The frequency domain resource A is divided into three subbands (namely, a subband 0 to a subband 2) in an SBFD time unit. In FIG. 6, an RO is configured based on the non-SBFD time unit, and RO#0 to RO#3 are configured on the frequency domain resource A in the non-SBFD time unit. However, because the subband 1 in the SBFD time unit is used for uplink transmission, RO#2 and RO#3 (shown by dashed lines) in the subband 0 in the SBFD time unit are unavailable.

For another example, FIG. 7 is a diagram of configuring an RO based on an SBFD time unit. In FIG. 7, a frequency domain resource A is used as an example. The frequency domain resource A is used for uplink transmission in the non-SBFD time unit. The frequency domain resource A is divided into three subbands (namely, a subband 0 to a subband 2) in an SBFD time unit. In FIG. 7, an RO is configured based on the SBFD time unit, and RO#0 and RO#1 are configured in the subband 1 in the SBFD time unit. However, for the non-SBFD time unit, the frequency domain resource A can be used for uplink transmission. In this way, ROs (for example, RO#2 and RO#3) (shown by dashed lines) that fall outside the subband 1 cannot be configured in the non-SBFD time unit. In other words, RO capacity in the non-SBFD time unit is limited, causing limited PRACH capacity.

In addition, cross-link interference exists between uplink transmission and downlink transmission in the SBFD time unit. Therefore, performance of transmission in the SBFD time unit is poor. When a terminal device in an area with poor cell coverage sends a random access preamble by using a PRACH resource in the SBFD time unit, because PRACH transmission performance is poor, a random access success rate decreases.

In view of this, the solutions in embodiments of this application are provided. In embodiments of this application, a dedicated PRACH resource is independently configured for each of an SBFD time unit and a non-SBFD time unit, that is, a set of PRACH resources is configured for the SBFD time unit, and a set of PRACH resources is configured for the non-SBFD time unit. Compared with a method of configuring a set of PRACH resources for the SBFD time unit or the non-SBFD time unit, this method can make all ROs in the SBFD time unit available, and can also resolve a problem that RO capacity in the non-SBFD time unit is limited, thereby improving resource utilization.

A specific granularity of a "time unit" is not limited in embodiments of this application. For example, the SBFD time unit may be an SBFD symbol or an SBFD slot, and the non-SBFD time unit may be a non-SBFD symbol or a non-SBFD slot. The SBFD symbol is a symbol provided with SBFD, and the non-SBFD symbol is a symbol not provided with SBFD. The SBFD slot is a slot provided with SBFD, and the non-SBFD slot is a slot not provided with SBFD. For an SBFD configuration, refer to the following two possible configuration manners based on whether both an SBFD symbol and a non-SBFD symbol are included in one slot:
(1) The SBFD configuration is at a slot level. To be specific, all symbols included in one slot are configured as SBFD symbols or configured as non-SBFD symbols.
(2) The SBFD configuration is at a symbol level. To be specific, some symbols included in one slot may be configured as SBFD symbols, and the other symbols may be configured as non-SBFD symbols.

In embodiments of this application, in the SBFD time unit, one carrier may include at least two subbands, and the at least two subbands include a subband for uplink transmission (which may be referred to as an uplink subband for short) and a subband for downlink transmission (which may be referred to as a downlink subband for short). A guard band (guard band) may be or may not be set between the uplink subband and the downlink subband. Whether a guard band is set between the uplink subband and the downlink subband is not limited in embodiments of this application. In addition, if there is a guard band between the uplink subband and the downlink subband, whether transmission is performed on the guard band is not limited in embodiments of this application. In addition, the uplink subband and the downlink subband may overlap, or may not overlap. Whether the uplink subband and the downlink subband overlap is not limited in embodiments of this application.

The technical solutions provided in embodiments of this application are described below in detail with reference to the accompanying drawings.

The technical solutions provided in embodiments of this application may be applied to a communication system that supports an SBFD mechanism. For example, the technical solutions provided in embodiments of this application may be applied to a 3GPP-related communication system, for example, a long term evolution (long term evolution, LTE) communication system or a fifth generation (the sixth generation, 5G) mobile communication system, or may be applied to another next-generation mobile communication system, for example, a sixth generation (6G) communication system, or other similar communication systems. The other similar communication systems may include wireless fidelity (wireless fidelity, Wi-Fi), V2X, an IoT system, a narrowband internet of things (narrowband internet of things, NB-IoT) system, and the like.

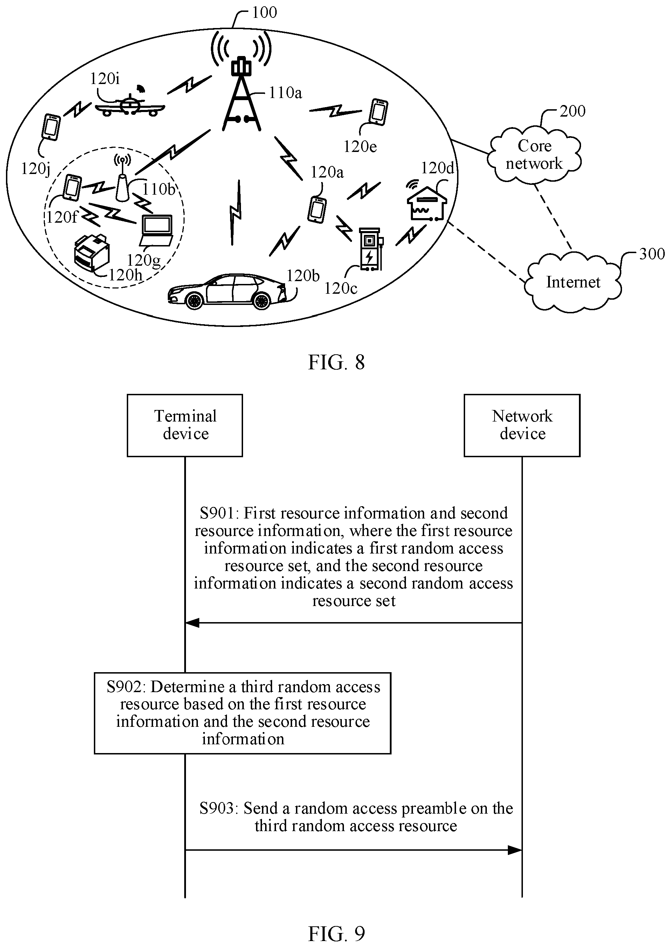

FIG. 8 shows a communication system to which an embodiment of this application is applicable. The communication system includes a radio access network 100 and a core network 200. Optionally, the communication system may further include an internet 300 (this is used as an example in FIG. 8).

The radio access network 100 may include at least one network device and at least one terminal device. For example, the radio access network 100 includes two network devices 110a and 110b and terminal devices 120a to 120j. A network architecture shown in FIG. 8 is merely an example, and there may be fewer or more terminal devices and/or network devices. The communication system described in embodiments of this application is intended to describe the technical solutions in embodiments of this application more clearly, but constitutes no limitation on the communication system to which embodiments of this application are applicable. For example, the communication system may further include other devices, and the other devices include, for example, a wireless relay device and a wireless backhaul device, which are not shown in FIG. 8. A person of ordinary skill in the art may learn that with evolution of the network architecture, the technical solutions provided in embodiments of this application are also applicable to a similar technical problem. When the technical solutions in embodiments of this application are applied to another communication system, devices, components, modules, and the like in embodiments may be replaced with corresponding devices, components, and modules in the another communication system. This is not limited.

In the following description process, for example, a random access method provided in embodiments of this application is applied to the network architecture shown in FIG. 8 and is performed by the network device and the terminal device. Steps performed by the network device may be implemented by a RAN device, or may be implemented by a component (for example, a module such as a baseband chip, or another processing unit or processor) in the RAN device. For example, the network device may be the access network device in FIG. 1, for example, the network 110a, or may be a chip (system) in the access network device in FIG. 1. Steps performed by the terminal device may be implemented by the terminal device, or may be implemented by a component (for example, a module such as a chip, a processing unit, or a processor) in the terminal device. The terminal device may be the terminal device 120a shown in FIG. 1, or may be a chip (system) in the terminal device in FIG. 1.

FIG. 9 is a schematic flowchart of a random access method according to an embodiment of this application. In FIG. 9, the method is described from a perspective of interaction between a network device and a terminal device. It should be understood that the random access method may alternatively be implemented by another apparatus, for example, a chip or a communication apparatus that has a communication function. As shown in FIG. 9, a procedure of the random access method includes the following steps.

S901: The network device sends first resource information and second resource information, where the first resource information indicates a first random access resource set, and the second resource information indicates a second random access resource set.

The first random access resource set includes one or more PRACH resources, and the second random access resource set also includes one or more PRACH resources. The network device configures the first random access resource set (also referred to as a first PRACH resource set) for the terminal device by using the first resource information, and the network device configures the second random access resource set (also referred to as a second PRACH resource set) for the terminal device by using the second resource information. Correspondingly, the terminal device receives the first resource information and the second resource information, and determines the first random access resource set and the second random access resource set.

A time domain resource corresponding to a PRACH resource in the first PRACH resource set is an SBFD time unit, and a time domain resource corresponding to a PRACH resource in the second PRACH resource set is a non-SBFD time unit. In other words, in this embodiment of this application, the network device configures the first PRACH resource set for the SBFD time unit, and configures the second PRACH resource set for the non-SBFD time unit, that is, configures a dedicated PRACH resource set for each of the SBFD time unit and the non-SBFD time unit. The dedicated PRACH resource set for the SBFD time unit is a set including one or more PRACH resources only in the SBFD time unit. The dedicated PRACH resource set for the non-SBFD time unit is a set including one or more PRACH resources only in the non-SBFD time unit.

For the terminal device, the dedicated PRACH resource set for the SBFD time unit (namely, the first PRACH resource set) and the dedicated PRACH resource set for the non-SBFD time unit (namely, the second PRACH resource set) exist on one carrier. An RO corresponding to the first PRACH resource set is determined in the SBFD time unit based on a mapping relationship between an SSB and an RO, a quantity of FDM ROs, and the like. An RO corresponding to the second PRACH resource set is determined in the non-SBFD time unit based on a mapping relationship between an SSB and an RO, a quantity of FDM ROs, and the like.

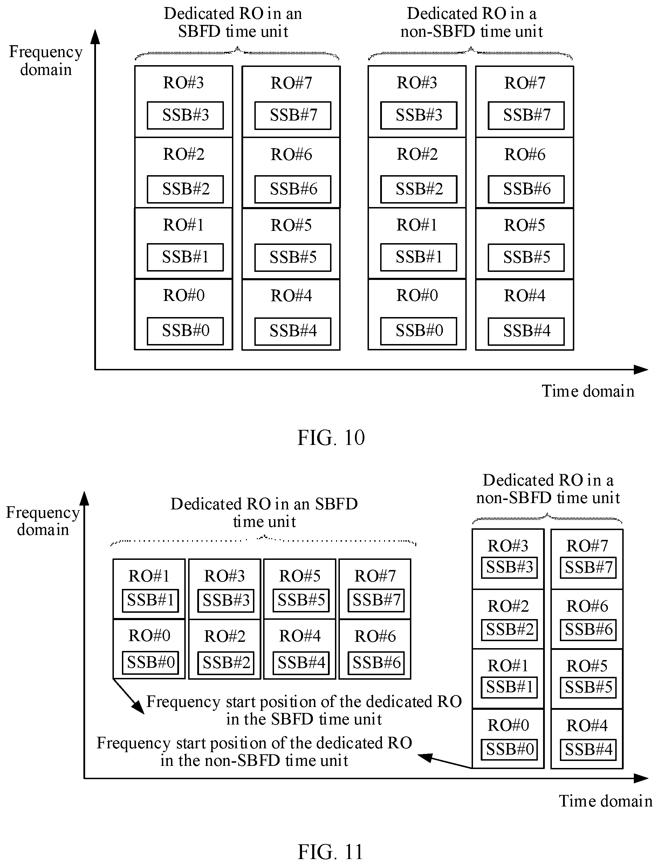

For example, FIG. 10 is a diagram of a dedicated RO in an SBFD time unit and a dedicated RO in a non-SBFD time according to an embodiment of this application. In FIG. 10, an example in which a cell has eight SSBs (namely, SSB#0 to SSB#7) is used. SSBs are in one-to-one correspondence with ROs in the SBFD time unit, and SSBs are in one-to-one correspondence with ROs in the non-SBFD time unit. Assuming that there are four FMD ROs in each of the SBFD time unit and the non-SBFD time unit, there are eight ROs (namely, RO#0 to RO#7) in the SBFD time unit, and there are eight ROs (namely, RO#0 to RO#7) in the non-SBFD time unit.

It can be learned from the foregoing descriptions that a PRACH resource configuration includes a time domain resource configuration, a frequency domain resource configuration, a preamble sequence resource configuration, power control information, and the like. The following sequentially describes how the network device configures the time domain resource configuration, the frequency domain resource configuration, the preamble sequence resource configuration, and the power control information to configure the first random access resource set and the second random access resource set.

### (1) Time domain resource

The network device may configure an independent PRACH configuration index for each of a dedicated PRACH resource of the SBFD time unit and a dedicated PRACH resource of the non-SBFD time unit. In other words, a time domain resource, a preamble format, and the like of the dedicated PRACH resource of the SBFD time unit are independently configured, and a time domain resource, a preamble format, and the like of the dedicated PRACH resource of the non-SBFD time unit are also independently configured. For example, the first resource information includes a first PRACH configuration index, and the second resource information includes a second PRACH configuration index.

The terminal device determines, based on the PRACH configuration indexes configured by the network device and an RA configuration table for TDD spectrum or an RA configuration table for FDD spectrum, a time domain resource corresponding to the first random access resource set and a time domain resource corresponding to the second random access resource set. For example, the first PRACH configuration index and the RA configuration table for TDD spectrum may determine the time domain resource corresponding to the first random access resource set; or the first PRACH configuration index and the RA configuration table for FDD spectrum may determine the time domain resource corresponding to the first random access resource set. Similarly, the terminal device may determine, based on the second PRACH configuration index and the RA configuration table for TDD spectrum, the time domain resource corresponding to the second random access resource set.

Optionally, the network device indicates the terminal device to use the RA configuration table for TDD spectrum or the RA configuration table for FDD spectrum. For example, the network device indicates the terminal device to use the RA configuration table for FDD spectrum. In this case, even if the terminal device works in a TDD cell, the time domain resource corresponding to the first random access resource set is determined by using the RA configuration table for FDD spectrum, to resolve a problem that a PRACH transmission available slot in the RA configuration table for TDD spectrum does not match an SBFD uplink available slot.

### (2) Frequency domain resource

The network device may independently configure a frequency start position of an RO and/or a quantity of FDM ROs for each of a dedicated PRACH resource of the SBFD time unit and a dedicated PRACH resource of the non-SBFD time unit. In other words, the network device independently configures the frequency start position of the RO and/or the quantity of FDM ROs for the dedicated PRACH resource of the SBFD time unit, and independently configures the frequency start position of the RO and/or the quantity of FDM ROs for the dedicated PRACH resource of the non-SBFD time unit. In other words, the network device configures a dedicated RO for the SBFD time unit, and configures a dedicated RO for the non-SBFD time unit.

For example, the first resource information includes a frequency start position of a lowest RO in the frequency domain and/or a quantity of FDM ROs in the first random access resource set, and the second resource information includes a frequency start position of a lowest RO in the frequency domain and/or a quantity of FDM ROs in the second random access resource set. Compared with a method of configuring a set of PRACH resources for the SBFD time unit or the non-SBFD time unit, this method can make all ROs in the SBFD time unit available, and can also resolve a problem that RO capacity in the non-SBFD time unit is limited, thereby increasing capacity of a random access channel.

The frequency start position of the dedicated RO of the SBFD time unit may be relative to a frequency position in a BWP to which the PRACH resource belongs. For example, the frequency start position of the dedicated RO of the SBFD time unit is relative to a frequency start position of the BWP. Alternatively, the frequency start position of the dedicated RO of the SBFD time unit may be a frequency start position relative to an overlapping part between the BWP and an uplink subband.

For ease of understanding, FIG. 11 is a diagram of respective dedicated ROs of an SBFD time unit and a non-SBFD time unit according to an embodiment of this application. In FIG. 11, an example in which a cell has eight SSBs is used. SSBs are in one-to-one correspondence with ROs in the SBFD time unit, and SSBs are in one-to-one correspondence with ROs in the non-SBFD time unit. A quantity of FDM ROs in the SBFD time unit is 2, and a quantity of FDM ROs in the non-SBFD time unit is 4. It can be learned from FIG. 11 that a frequency start position of the dedicated RO of the SBFD time unit and a frequency start position of the dedicated RO of the non-SBFD time unit are independent positions and may be different. Compared with FIG. 6 or FIG. 7, it can be found that FIG. 11 shows that ROs in the SBFD time unit are all available, and a quantity of ROs in the non-SBFD time unit is as large as possible, thereby alleviating the issue of limited capacity and improving resource utilization.

Optionally, the network device configures frequency start positions of a set of ROs and/or a quantity of FDM ROs for the dedicated PRACH resource of the SBFD time unit and the dedicated PRACH resource of the non-SBFD time unit.

### (3) Preamble sequence resource

The network device may independently configure one or more parameters related to a preamble sequence for each of a dedicated PRACH resource of the SBFD time unit and a dedicated PRACH resource of the non-SBFD time unit. For example, the first resource information includes at least one parameter related to a first preamble sequence, and the first preamble sequence belongs to a preamble sequence corresponding to the dedicated PRACH resource of the SBFD time unit; and the second resource information includes at least one parameter related to a second preamble sequence, and the second preamble sequence belongs to a preamble sequence corresponding to the dedicated PRACH resource of the non-SBFD time unit.

Optionally, the network device configures a set of parameters related to a preamble sequence for the dedicated PRACH resource of the SBFD time unit and the dedicated PRACH resource of the non-SBFD time unit.

As described above, the network device may configure a mapping relationship between an SSB and an RO and a quantity of preambles of each SSB on each RO by using a higher-layer parameter ssb-perRACH-OccasionAndCB-PreamblesPerSSB. However, in this embodiment of this application, the mapping relationship between an SSB and an RO may be independently configured for each of the dedicated PRACH resource of the SBFD time unit and the dedicated PRACH resource of the non-SBFD time unit. For example, the network device may flexibly configure the quantity of ROs based on factors such as PRACH capacity, the quantity of users, and resources of the dedicated PRACH resource of the SBFD time unit and the dedicated PRACH resource of the non-SBFD time unit.

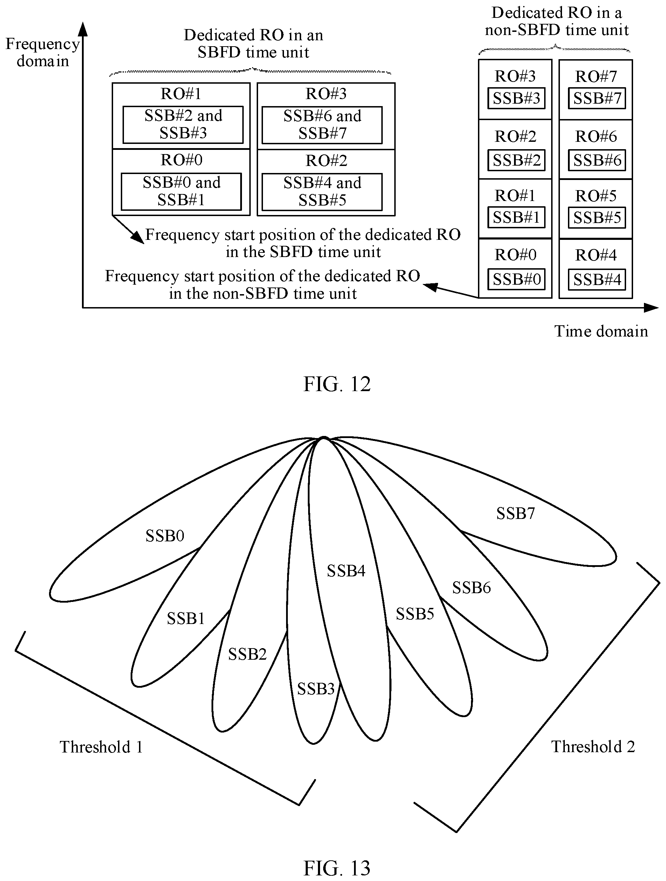

For ease of understanding, FIG. 12 is another diagram of respective dedicated ROs of an SBFD time unit and a non-SBFD time unit according to an embodiment of this application. In FIG. 12, an example in which a cell has eight SSBs is used. In FIG. 12, two SSBs are associated with one RO in the SBFD time unit, and SSBs are in one-to-one correspondence with ROs in the non-SBFD time unit. A quantity of FDM ROs in the SBFD time unit is 2, and a quantity of FDM ROs in the non-SBFD time unit is 4. A frequency start position of the dedicated RO of the SBFD time unit and a frequency start position of the dedicated RO of the non-SBFD time unit are independent positions and may be different. Compared with FIG. 6 or FIG. 7, it can be found that FIG. 12 shows that ROs in the SBFD time unit are all available and as many as possible, and a quantity of ROs in the non-SBFD time unit is as large as possible, thereby alleviating the issue of limited capacity and improving resource utilization.

Optionally, the network device configures a set of parameters related to the mapping relationship between an RO and an SSB for the dedicated PRACH resource of the SBFD time unit and the dedicated PRACH resource of the non-SBFD time unit.

### (4) Power control information

The network device may independently configure power control information for each of a dedicated PRACH resource of the SBFD time unit and a dedicated PRACH resource of the non-SBFD time unit. For example, the first resource information includes first power information, the first power information indicates information related to transmit power control for a random access preamble on a first random access resource, and the first random access resource belongs to the first random access resource set; and the second resource information includes second power information, the second power information indicates information related to transmit power control for a random access preamble on a second random access resource, and the second random access resource belongs to the second random access resource set. The information related to transmit power for the random access preamble includes expected received power and/or a power ramping step. The power control information is independently configured for each of the dedicated PRACH resource of the SBFD time unit and the dedicated PRACH resource of the non-SBFD time unit, so that a PRACH in the SBFD time unit can be sent at higher transmit power, thereby reducing impact on CLI in the SBFD time unit.

S902: The terminal device determines a third random access resource based on the first resource information and the second resource information.

The third random access resource is a resource used by the terminal device to send a random access preamble. The network device configures the first random access resource set and the second random access resource set. According to an actual requirement, the terminal device may determine the third random access resource from the first random access resource set, or may determine the third random access resource from the second random access resource set.

In an implementation, the terminal device may determine, based on received power of a reference signal associated with a random access resource, a random access resource set from which the terminal device determines the third random access resource. The reference signal may be an SSB or a channel state information reference signal (channel state information reference signal, CSI-RS). The received power of the reference signal includes reference signal received power (reference signal received power, RSRP).

For a CBRA process and a CFRA process, the terminal device determines the third random access resource in different manners. For the CBRA process and the CFRA process, the following separately describes how the terminal device determines the third random access resource.

### (1) The CBRA process includes the following four manners (namely, Manner A to Manner D).

**Manner A:** When received power of at least one reference signal in a first reference signal set is greater than or equal to a corresponding threshold, the third random access resource belongs to the first random access resource set. On the contrary, when received power of any reference signal in a first reference signal set is less than a corresponding threshold, the third random access resource belongs to the second random access resource set. In other words, when the received power of the at least one reference signal in the first reference signal set is greater than or equal to the corresponding threshold, the terminal device determines the third random access resource from the first random access resource set. On the contrary, when the received power of the any reference signal in the first reference signal set is less than the corresponding threshold, the terminal device determines the third random access resource from the second random access resource set. The first reference signal set is associated with the first random access resource set and/or the second random access resource set. Alternatively, the first reference signal set is associated with the first random access resource set, and the first reference signal set is also associated with the second random access resource set, that is, the first random access resource set and the second random access resource set are associated with a same reference signal set (namely, the first reference signal set).

Each reference signal corresponds to one threshold, and thresholds corresponding to different reference signals may be the same or may be different. For example, the first reference signal set includes a reference signal 1 and a reference signal 2. In an implementation, the reference signal 1 corresponds to a threshold 1, the reference signal corresponds to a threshold 2, and the threshold 1 is different from the threshold 2. In another implementation, both the reference signal 1 and the reference signal 2 correspond to a threshold 1.

That the received power of the at least one reference signal in the first reference signal set is greater than or equal to the corresponding threshold means that the first reference signal set has the at least one reference signal whose received power is greater than or equal to the corresponding threshold. The foregoing example is still used, that is, the first reference signal set includes the reference signal 1 and the reference signal 2, the reference signal 1 corresponds to the threshold 1, and the reference signal corresponds to the threshold 2. That the received power of the at least one reference signal in the first reference signal set is greater than or equal to the corresponding threshold includes: Received power of the reference signal 1 is greater than or equal to the corresponding threshold 1; or received power of the reference signal 2 is greater than or equal to the corresponding threshold 2; or received power of the reference signal 1 is greater than or equal to the corresponding threshold 1, and received power of the reference signal 2 is greater than or equal to the corresponding threshold 2.

If the received power of the at least one reference signal in the first reference signal set is greater than or equal to the corresponding threshold, it indicates that performance of transmission between the terminal device and the network device is good. In this case, even if the terminal device selects a resource with poor transmission performance to send a PRACH, a random access success rate can still be ensured. For example, although a resource in the first random access resource set has CLI, the terminal device sends a random access preamble by using the resource in the first random access resource set, so that a high random access success rate can still be ensured. Therefore, when the received power of the at least one reference signal in the first reference signal set is greater than or equal to the corresponding threshold, the terminal device may select the resource in the first random access resource set to send the random access preamble.

On the contrary, when the received power of the any reference signal in the first reference signal set is less than the corresponding threshold, it indicates that performance of transmission between the terminal device and the network device is poor. In this case, to increase a random access success rate, the terminal device may preferentially select a resource in the second random access resource set with relatively good transmission performance to send the random access preamble.

After determining to use either the first random access resource set or the second random access resource set, the terminal device may determine the third random access resource from either the first random access resource set or the second random access resource set. For ease of description, an example in which the terminal device selects the first random access resource set and determines the third random access resource from the first random access resource set is used. For a manner in which the terminal device determines the third random access resource from the first random access resource set, refer to a current manner of determining a to-be-used random access resource (for example, an RO or a random access preamble) from a random access resource set. For example, if the network device configures an RSRP threshold used to select a random access resource, and when RSRP of at least one reference signal is greater than or equal to the RSRP threshold, the terminal device randomly selects a reference signal from reference signals that meet the RSRP threshold, and sends random access by using a PRACH resource corresponding to the selected reference signal; otherwise, the terminal device randomly selects a reference signal from all reference signals, and sends random access by using a PRACH resource corresponding to the selected reference signal.

Correspondingly, the terminal device may first select a first reference signal from the first reference signal set, and then determine the third random access resource from a random access resource corresponding to the first reference signal in the first random access resource set. Similarly, the terminal device first selects a first reference signal from the first reference signal set, and then determines the third random access resource from a random access resource corresponding to the first reference signal in the second random access resource set. For selecting the first reference signal by the terminal device from the first reference signal set, refer to a conventional technology. For example, if the network device configures an RSRP threshold used to select a random access resource, and RSRP of at least one reference signal in the first reference signal set is greater than or equal to the RSRP threshold, the terminal device randomly selects a reference signal from reference signals that meet the RSRP threshold as the first reference signal; otherwise, the terminal device randomly selects a reference signal from all reference signals in the first reference signal set as the first reference signal.

Manner B: When received power of at least one reference signal in a first reference signal set is greater than or equal to a corresponding threshold, the third random access resource belongs to either the first random access resource set or the second random access resource set. On the contrary, when received power of any reference signal in a first reference signal set is less than a corresponding threshold, the third random access resource belongs to the second random access resource set. In other words, when the received power of the at least one reference signal in the first reference signal set is greater than or equal to the corresponding threshold, the terminal device determines the third random access resource from the first random access resource set or the second random access resource. On the contrary, when the received power of the any reference signal in the first reference signal set is less than the corresponding threshold, the terminal device determines the third random access resource from the second random access resource set.

It may be understood that when the received power of the at least one reference signal in the first reference signal set is greater than or equal to the corresponding threshold, regardless of whether the terminal device selects a resource in the first random access resource set or selects a resource in the second random access resource set to send a random access preamble, a high random access success rate can be ensured. Therefore, in Manner B, when the received power of the at least one reference signal in the first reference signal set is greater than or equal to the corresponding threshold, the terminal device may randomly select to determine the third random access resource from either the first random access resource set or the second random access resource set, which is more flexible.

After determining to use either the first random access resource set or the second random access resource set, the terminal device may determine the third random access resource from either the first random access resource set or the second random access resource set. Refer to related content in Manner A above. Details are not described herein again.

In Manner A and Manner B, the terminal device first selects a random access resource set, and then determines the third random access resource from the selected random access resource set. In an alternative manner, the terminal device may first select a reference signal, then determine a to-be-used random access resource set based on received power of the selected reference signal, and then determine the third random access resource from the random access resource set. For example, the third random access resource may alternatively be determined in Manner C and Manner D below.

**Manner C:** The terminal device selects a second reference signal from a first reference signal set; and when received power of the second reference signal is greater than or equal to a threshold corresponding to the second reference signal, the terminal device determines the third random access resource from a random access resource corresponding to the second reference signal in the first random access resource set; or when received power of the second reference signal is less than a threshold corresponding to the second reference signal, the terminal device determines the third random access resource from a random access resource corresponding to the second reference signal in the second random access resource set. The first reference signal set is associated with the first random access resource set and/or the second random access resource set.

Manner C may also be understood as follows: When the received power of the second reference signal is greater than or equal to the threshold corresponding to the second reference signal, the first random access resource set is first selected as a candidate random access resource set, and then the third random access resource is determined from the resource corresponding to the second reference signal in the first random access resource set. When the received power of the second reference signal is less than the threshold corresponding to the second reference signal, the second random access resource set is first selected as a candidate random access resource set, and then the third random access resource is determined from the resource corresponding to the second reference signal in the second random access resource set.

Similar to Manner A, when the received power of the second reference signal is greater than or equal to the threshold corresponding to the second reference signal, it indicates that the resource corresponding to the second reference signal has good transmission performance. Although a resource in the first random access resource set has CLI and poor transmission performance, a high random access success rate can still be ensured when the terminal device sends a random access preamble by using the resource corresponding to the second reference signal in the first random access resource set. When the received power of the second reference signal is less than the threshold corresponding to the second reference signal, to increase a random access success rate, the terminal device may first select a resource corresponding to the second reference signal from the second random access resource set with relatively good transmission performance to send the random access preamble.

In Manner C, that the terminal device selects the second reference signal from the first reference signal set includes: The terminal device randomly selects a reference signal from the first reference signal set as the second reference signal, or may select a reference signal with maximum received power from the first reference signal set as the second reference signal; or reference may be made to the foregoing conventional technology. In addition, similar to Manner A, in Manner C, each reference signal corresponds to one threshold, and thresholds corresponding to different reference signals may be the same or may be different. For details, refer to related content of Manner A above. Details are not described herein again.

**Manner D:** The terminal device selects a second reference signal from a first reference signal set; and when received power of the second reference signal is greater than or equal to a threshold corresponding to the second reference signal, the terminal device determines the third random access resource from a random access resource corresponding to the second reference signal in either the first random access resource set or the second random access resource set; or when received power of the second reference signal is less than a threshold corresponding to the second reference signal, the terminal device determines the third random access resource from a random access resource corresponding to the second reference signal in the second random access resource set.

A difference between Manner D and Manner C lies in that when the received power of the second reference signal is greater than or equal to the threshold corresponding to the second reference signal, the first random access resource set may be selected as a candidate random access resource set, or the second random access resource set may be selected as a candidate random access resource set, which is more flexible. For details, refer to related content of Manner C above. Details are not described herein again.

Considering that the network device is subject to different CLI interference when receiving PRACHs in different SSB transmit beam directions, to improve PRACH transmission performance of the terminal device as much as possible, in this embodiment of this application, a threshold used to determine the third random access resource is configured based on a granularity of a reference signal. For example, different reference signals are associated with different thresholds. In this way, when power of cross-link interference that exists when PRACHs are received in different beam directions is different, the terminal device can select a random access resource with better performance to perform PRACH transmission, to ensure a random access success rate of the terminal device.

For example, the network device may configure Y thresholds, the Y thresholds correspond to X reference signals, and 1≤Y≤X. When Y=1, the network device configures one threshold, and any reference signal in the first reference signal set corresponds to the threshold. When X=Y, the Y thresholds are in one-to-one correspondence with the X reference signals. When Y<X, it indicates that a plurality of reference signals are associated with a same threshold. For example, FIG. 13 is a diagram of mapping between the Y thresholds and the X reference signals. In FIG. 13, an example in which Y=2, X=8, and a reference signal is an SSB is used. As shown in FIG. 13, SSB0 to SSB3 are associated with a threshold 1, and SSB4 to SSB7 are associated with a threshold 2.

Optionally, the correspondence/association relationship between the X reference signals corresponding to the Y thresholds may be (pre)configured. For example, the network device may send first indication information to the terminal device, where the first indication information may indicate the association relationship between the X reference signals in the first reference signal set and the Y thresholds, X is a positive integer, Y is a positive integer, and 1≤Y≤X.

Optionally, the correspondence/association relationship between the X reference signals corresponding to the Y thresholds may be determined according to a predefined rule. For example, the network device may send first indication information to the terminal device, where the first indication information indicates the Y thresholds. The terminal device receives the first indication information, and associates the Y thresholds with the X reference signals in the first reference signal set according to the predefined rule, to obtain the correspondence between the X reference signals corresponding to the Y thresholds.

This embodiment of this application imposes no limitation on a type of signaling carrying the first indication information. For example, the first indication information may be carried in one or more of RRC signaling, DCI, or a MAC CE.

When the network device configures the Y thresholds, in Manner A and Manner B above, a manner in which the terminal device selects either the first random access resource set or the second random access resource set remains unchanged. When determining the third random access resource from either the first random access resource set or the second random access resource set, the terminal device determines whether there is a reference signal whose received power exceeds a threshold corresponding to the reference signal. The example in FIG. 13 is still used. SSB0 is associated with the threshold 1, and when it is determined whether received power of SSB0 exceeds a threshold, the received power of SSB0 is compared with the threshold 1.

Similarly, in Manner C and Manner D, when selecting the second reference signal, and determining, based on the received power of the second reference signal, to select either the first random access resource set or the second random access resource set, the terminal device compares the received power of the second reference signal with the threshold corresponding to the second reference signal. For example, the second reference signal is SSB0, and SSB0 is associated with the threshold 1. When received power of SSB0 is greater than or equal to the threshold 1, the terminal device selects to determine the third random access resource from a random access resource corresponding to SSB0 in the first random access resource set.

Optionally, if no threshold used to select a random access resource is set, the terminal device may randomly select either the first random access resource set or the second random access resource set as a candidate random access resource set, and then select the third random access resource from the candidate random access resource set to initiate random access.

(2) In the CFRA process, different from the CBRA process, a PRACH resource used by the terminal device to send a preamble is configured by the network device, and there is no conflict in a preamble sending process in the CFRA process. The CFRA process may be triggered by the terminal device. For example, when beam failure recovery (beam failure recovery) is performed or a system information request (system information request) is made, the terminal device may trigger CFRA. Alternatively, CFRA may be triggered by the network device. For example, the network device may trigger the CFRA process by using RRC signaling or a PDCCH order. Based on different CFRA trigger reasons, there are the following three cases (namely, Case 1, Case 2, and Case 3) in which the terminal device determines the third random access resource.

**Case 1:** There are the following two manners in which the network device triggers, by using the RRC signaling, the terminal device to initiate the CFRA process.

**Manner 1:** The network device may configure, by using the RRC signaling, a PRACH resource for initiating CFRA by the terminal device. In addition, the network device further indicates the terminal device to use the dedicated PRACH resource of the SBFD time unit or the dedicated PRACH resource of the non-SBFD time unit. The terminal device determines the third random access resource based on the configuration of the network device.

For example, the network device may configure at least one reference signal, and may configure an associated contention-free random access resource for each reference signal. The contention-free random access resource includes a preamble, an RO, and the like. The terminal device may select a reference signal from the at least one reference signal, and initiate random access by using a random access resource associated with the reference signal. The terminal device may randomly select a reference signal or may select a reference signal with maximum received power from the at least one reference signal.

**Manner 2:** The terminal device determines, based on received power of at least one reference signal, a random access resource set from which the terminal device determines the third random access resource. Refer to Manner A to Manner D above. A difference lies in that in Manner A and Manner B, the at least one reference signal is a reference signal configured by the network device in a PRACH resource of CFRA. In Manner C and Manner D, the second reference signal is a reference signal configured by the network device in a PRACH resource of CFRA.

**Case 2:** The terminal device triggers the CFRA process.

Manner 1 and Manner 2 in Case 1 are also applicable to Case 2, and details are not described herein again.

**Case 3:** The network device triggers, by using the PDCCH order, the terminal device to initiate the CFRA process.

Manner 1 and Manner 2 in Case 1 are also applicable to Case 3. Optionally, when a random access preamble index (random access preamble index) field in DCI carried in the PDCCH order has all values of 0, the third random access resource is determined in Manner 1 in Case 1.

In an alternative manner, in Case 3, the third random access resource may alternatively be determined in Manner 3 below.

**Manner 3:** The network device indicates either the first random access resource set or the second random access resource set to the terminal device.

The network device may send second indication information to the terminal device, where the second indication information indicates that the third random access resource belongs to either the first random access resource set or the second random access resource set. The terminal device determines the third random access resource from either the first random access resource set or the second random access resource set based on the second indication information.

The second indication information is carried in the DCI of the PDCCH order. For example, the second indication information is carried in a first field included in the DCI. The first field may be a newly defined/newly added field, or may reuse a defined field. When the first field has a first value, the indication information indicates that the third random access resource belongs to the first random access resource set; or when the first field has a second value, the indication information indicates that the third random access resource belongs to the second random access resource set. For example, the first value is 0, and the second value is 1; or the first value is 1, and the second value is 0. Optionally, the DCI further includes a random access preamble index field, and the random access preamble index field has not all values of 0.

S903: The terminal device sends the random access preamble by using the third random access resource.

After determining the third random access resource, the terminal device sends the random access preamble on the third random access resource, to initiate random access.

In the random access method provided in this embodiment of this application, a dedicated PRACH resource is independently configured for each of an SBFD time unit and a non-SBFD time unit. Compared with a method of configuring a set of PRACH resources for the SBFD time unit or the non-SBFD time unit, this method can make all ROs in the SBFD time unit available, and can also resolve a problem that RO capacity in the non-SBFD time unit is limited, thereby improving resource utilization.

In the foregoing embodiments provided in this application, the method provided in embodiments of this application is described from a perspective of interaction between the terminal device and the network device. The steps performed by the terminal device may be implemented by different functional entities included in the terminal device. The steps performed by the network device may be implemented by different functional entities included in the network device. For example, the network device may be in a CU-DU architecture, a CU may generate a second message, and a DU may send the second message. To implement functions in the method provided in embodiments of this application, the terminal device and the network device may include a hardware structure and/or a software module, and the foregoing functions are implemented in a form of a hardware structure, a software module, or a hardware structure and a software module. Whether a function in the foregoing functions is performed by using the hardware structure, the software module, or the hardware structure and the software module depends on particular applications and design constraints of the technical solutions.

With reference to the accompanying drawings, the following describes communication apparatuses for implementing the foregoing methods in embodiments of this application. Therefore, all the foregoing content may be used in the following embodiments. Repeated content is not described again.

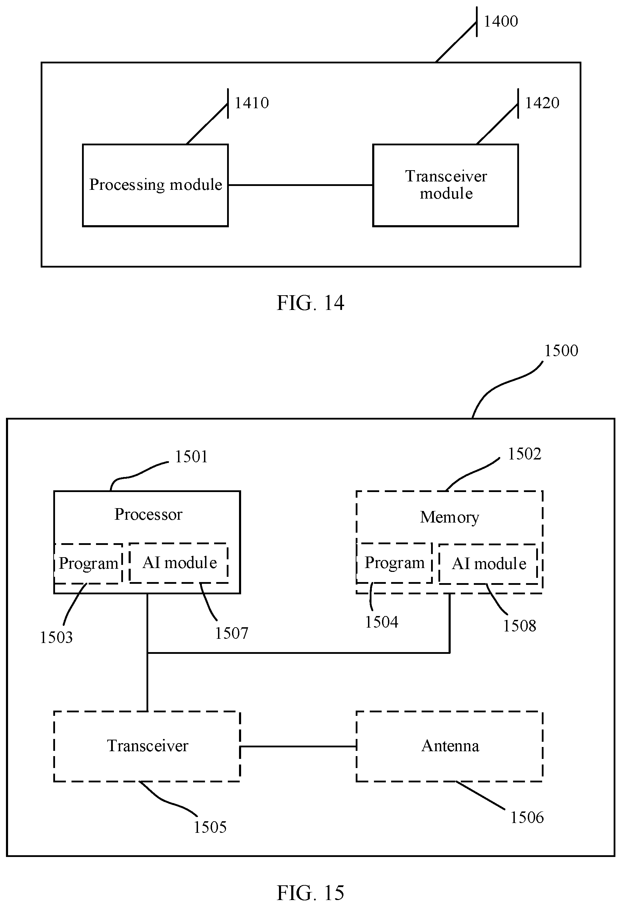

FIG. 14 is a block diagram of a communication apparatus 1400 according to an embodiment of this application. The communication apparatus 1400 may be the network device or the terminal device in the foregoing embodiments. For example, the communication apparatus 1400 may be the network device or the terminal device in FIG. 1. Alternatively, the communication apparatus 1400 is a chip (system) in the network device or a chip (system) in the terminal device. Alternatively, the communication apparatus 1400 is a software module in the network device or the terminal device. The communication apparatus 1400 may correspondingly implement functions or steps implemented by the terminal device or the network device in the foregoing method embodiments. The communication apparatus 1400 may include a processing module 1410 and a transceiver module 1420. Optionally, a storage module may be further included. The storage module may be configured to store instructions (code or a program) and/or data. The storage module may be, for example, a memory. The processing module 1410 and the transceiver module 1420 may be coupled to the storage module. For example, the processing module 1410 may read the instructions (the code or the program) and/or the data in the storage module, to implement the corresponding methods. When the communication apparatus 1400 is the chip in the terminal device, the storage module may be a storage module in the chip, for example, a register or a cache. For example, the storage module may alternatively be a storage module that is in the network device/terminal device and that is located outside the chip, for example, a read-only memory (read-only memory, ROM), another type of static storage device that can store static information and instructions, or a random access memory (random access memory, RAM). The foregoing units may be independently disposed, or may be partially or completely integrated.

In a possible implementation, the processing module 1410 may be a processor or a controller, for example, may be a general-purpose central processing unit (central processing unit, CPU), a general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The processing module may implement or execute various example logical blocks, modules, and circuits described with reference to content disclosed in this application. Alternatively, the processor may be a combination of processors implementing a computing function, for example, a combination of one or more microprocessors, or a combination of a DSP and a microprocessor. The transceiver module 1420 is a transceiver, an interface circuit, a bus, a pin, or another possible communication interface, and is configured to receive a signal from another apparatus. For example, when the apparatus is implemented in a form of a chip, the transceiver module 1420 is an interface circuit used by the chip to receive a signal from another chip or apparatus, or is an interface circuit used by the chip to send a signal to another chip or apparatus.

For example, the communication apparatus 1400 can correspondingly implement behavior and functions of the terminal device in the foregoing method embodiments. The communication apparatus 1400 may be the terminal device, or may be a component (for example, a chip or a circuit) used in the terminal device, or may be a chip or a chip group in the terminal device or a part of a chip that is configured to perform a related method function, or may be a software module that can implement the method performed by the terminal device in the foregoing method. This is not limited.

For example, the communication apparatus 1400 can implement the method performed by the terminal device in the embodiment in FIG. 9. For example, the transceiver module 1420 may be configured to perform S901 and S903 in the embodiment shown in FIG. 9, and/or configured to support another process of the technology described in this specification; and the processing module 1410 may be configured to perform S902 in the embodiment shown in FIG. 9, and/or configured to perform another process of the technology described in this specification.

In an implementation, the transceiver module 1420 is configured to receive first resource information and second resource information, where the first resource information indicates a first random access resource set, the second resource information indicates a second random access resource set, a time domain resource corresponding to the first random access resource set is an SBFD time unit, and a time domain resource corresponding to the second random access resource set is a non-SBFD time unit. The processing module 1410 is configured to determine a third random access resource based on the first resource information and the second resource information, where the third random access resource belongs to either the first random access resource set or the second random access resource set. The transceiver module 1420 is further configured to send a random access preamble by using the third random access resource.

In an optional implementation, the processing module 1410 is specifically configured to: when received power of at least one reference signal in a first reference signal set is greater than or equal to a corresponding threshold, determine the third random access resource from the first random access resource set; or when received power of any reference signal in a first reference signal set is less than a corresponding threshold, determine the third random access resource from the second random access resource set, where the first reference signal set is associated with the first random access resource set and/or the second random access resource set.

In an optional implementation, the processing module 1410 is specifically configured to: when received power of at least one reference signal in a first reference signal set is greater than or equal to a corresponding first threshold, determine the third random access resource from either the first random access resource set or the second random access resource set; or when received power of any reference signal in a first reference signal set is less than a corresponding threshold, determine the third random access resource from the second random access resource set, where the first reference signal set is associated with the first random access resource set and/or the second random access resource set.

In an optional implementation, the processing module 1410 is further configured to select a first reference signal from a first reference signal set; and the processing module 1410 is specifically configured to: determine the third random access resource from a random access resource corresponding to the first reference signal in the first random access resource set; or determine the third random access resource from a random access resource corresponding to the first reference signal in the second random access resource set.

In an optional implementation, the processing module 1410 is specifically configured to: select a second reference signal from a first reference signal set; and when received power of the second reference signal is greater than or equal to a threshold corresponding to the second reference signal, determine the third random access resource from a random access resource corresponding to the second reference signal in the first random access resource set; or when received power of the second reference signal is less than a threshold corresponding to the second reference signal, determine the third random access resource from a random access resource corresponding to the second reference signal in the second random access resource set, where the second reference signal set is associated with the first random access resource set and/or the second random access resource set.

In an optional implementation, the processing module 1410 is specifically configured to: select a second reference signal from a first reference signal set; and when received power of the second reference signal is greater than or equal to a threshold corresponding to the second reference signal, determine the third random access resource from a random access resource corresponding to the second reference signal in either the first random access resource set or the second random access resource set; or when received power of the second reference signal is less than a threshold corresponding to the second reference signal, determine the third random access resource from a random access resource corresponding to the second reference signal in the second random access resource set, where the second reference signal set is associated with the first random access resource set and/or the second random access resource set.

In an optional implementation, the transceiver module 1420 is further configured to receive first indication information, where the first indication information indicates Y thresholds, the Y thresholds have an association relationship with X reference signals in a first reference signal set, X is a positive integer, Y is a positive integer, and 1≤Y≤X; or the first indication information indicates an association relationship between X reference signals in a first reference signal set and Y thresholds, X is a positive integer, Y is a positive integer, and 1≤Y≤X.

In an optional implementation, the transceiver module 1420 is further configured to receive second indication information, where the second indication information indicates that the third random access resource belongs to either the first random access resource set or the second random access resource set.

In an optional implementation, the second indication information is carried in a first field included in DCI, where when the first field has a first value, the second indication information indicates that the third random access resource belongs to the first random access resource set; or when the first field has a second value, the second indication information indicates that the third random access resource belongs to the second random access resource set.

In an optional implementation, the first resource information includes a frequency start position of a lowest RO in the frequency domain in the first random access resource set and/or a quantity of frequency division multiplexing ROs in the first random access resource set; and the second resource information includes a frequency start position of a lowest RO in the frequency domain in the second random access resource set and/or a quantity of frequency division multiplexing ROs in the second random access resource set.

In an optional implementation, the first resource information includes a first PRACH configuration index, where the first PRACH configuration index and a random access RA configuration table for TDD spectrum are used to determine the time domain resource corresponding to the first random access resource set; or the first PRACH configuration index and an RA configuration table for FDD spectrum are used to determine the time domain resource corresponding to the first random access resource set; and the second resource information includes a second PRACH configuration index, where the second PRACH configuration index and the RA configuration table for TDD spectrum are used to determine the time domain resource corresponding to the second random access resource set.

In an optional implementation, the first resource information further includes first power information, and the first power information indicates information related to transmit power control for a random access preamble in the first random access resource set; and the second resource information further includes second power information, and the second power information indicates information related to transmit power control for a random access preamble in the second random access resource set. The information related to transmit power for the random access preamble includes expected received power and/or a power ramping step.

For another example, the communication apparatus 1400 can correspondingly implement behavior and functions of the network device in the foregoing method embodiments. The communication apparatus 1400 may be the network device, or may be a component (for example, a chip or a circuit) used in the network device, or may be a chip or a chip group in the network device or a part of a chip that is configured to perform a related method function, or may be a software module that can implement the method performed by the network device in the foregoing method. This is not limited.

In an implementation, the transceiver module 1420 is configured to send first resource information and second resource information, where the first resource information indicates a first random access resource set, the second resource information indicates a second random access resource set, a time domain resource corresponding to the first random access resource set is a subband full duplex SBFD time unit, and a time domain resource corresponding to the second random access resource set is a non-SBFD time unit; and the transceiver module 1420 is further configured to detect a random access preamble in the first random access resource set and/or the second random access resource set.

In an optional implementation, the transceiver module 1420 is further configured to send first indication information, where the first indication information indicates Y thresholds, the Y thresholds have an association relationship with X reference signals in a first reference signal set, X is a positive integer, Y is a positive integer, and 1≤Y≤X; or the first indication information indicates an association relationship between X reference signals in a first reference signal set and Y thresholds, X is a positive integer, Y is a positive integer, and 1≤Y≤X.

In an optional implementation, the transceiver module 1420 is further configured to send second indication information, where the second indication information indicates that a third random access resource belongs to either the first random access resource set or the second random access resource set.

In an optional implementation, the first resource information includes a frequency start position of a lowest RO in the frequency domain in the first random access resource set and/or a quantity of frequency division multiplexing ROs in the first random access resource set; and the second resource information includes a frequency start position of a lowest RO in the frequency domain in the second random access resource set and/or a quantity of frequency division multiplexing ROs in the second random access resource set.

In an optional implementation, the first resource information includes a first PRACH configuration index, where the first PRACH configuration index and a random access RA configuration table for TDD spectrum are used to determine the time domain resource corresponding to the first random access resource set; or the first PRACH configuration index and an RA configuration table for FDD spectrum are used to determine the time domain resource corresponding to the first random access resource set; and the second resource information includes a second PRACH configuration index, where the second PRACH configuration index and the RA configuration table for TDD spectrum are used to determine the time domain resource corresponding to the second random access resource set.

In an optional implementation, the first resource information further includes first power information, and the first power information indicates information related to transmit power control for a random access preamble in the first random access resource set; and the second resource information further includes second power information, and the second power information indicates information related to transmit power control for a random access preamble in the second random access resource set. The information related to transmit power for the random access preamble includes expected received power and/or a power ramping step.

When the communication apparatus 1400 is a chip-type apparatus or circuit, the transceiver module may be an input/output circuit and/or a communication interface, and the processing module is an integrated processor, a microprocessor, or an integrated circuit.

FIG. 15 is a block diagram of a communication apparatus 1500 according to an embodiment of this application. The communication apparatus 1500 may be the network device or the first terminal device in the foregoing embodiments. For example, the communication apparatus 1500 may be the network device or the terminal device in FIG. 1. Alternatively, the communication apparatus 1500 is a chip (system) in the network device or the terminal device. In this embodiment of this application, the chip system may include a chip, or may include a chip and another discrete component. For specific functions, refer to the descriptions of the foregoing method embodiments.

The communication apparatus 1500 includes one or more processors 1501, configured to implement or support the communication apparatus 1500 in implementing functions of the terminal device or the network device in the methods provided in embodiments of this application. For details, refer to the detailed descriptions in the method examples. Details are not described herein again. The processor 1501 may also be referred to as a processing unit or a processing module, and may implement a specific control function. The processor 1501 may be a general-purpose processor, a special-purpose processor, or the like. For example, the processor includes a baseband processor, a central processing unit, an application processor, a modem processor, a graphics processing unit, an image signal processor, a digital signal processor, a video codec processor, a controller, a memory, and/or a neural network processor. The baseband processor may be configured to process a communication protocol and communication data. The central processing unit may be configured to: control the communication apparatus 1500 (for example, a network apparatus or a terminal apparatus), execute a software program, and/or process data. Different processors may be independent components, or may be integrated into one or more processors, for example, integrated into one or more application-specific integrated circuits.

In a design, the processor 1501 may include a program 1503 (which may also be referred to as code or instructions sometimes). The program 1503 may be run on the processor 1501, to enable the communication apparatus 1500 to perform the method described in the following embodiments. In another possible design, the communication apparatus 1500 includes a circuit (not shown in FIG. 15), and the circuit is configured to implement functions of the network device or the terminal device in the foregoing embodiments.

In a design, the communication apparatus 1500 may include one or more memories 1502. The memory stores a program 1504 (which may also be referred to as code or instructions sometimes), and the program 1504 may be run on the processor 1501, to enable the communication apparatus 1500 to perform the method described in the foregoing method embodiments, for example, the procedure shown in FIG. 9.

In a design, the processor 1501 and/or the memory 1502 may include an artificial intelligence (artificial intelligence, AI) module 1507 and an AI module 1508. The AI module is configured to implement an AI-related function. The AI module may be implemented by using software, hardware, or a combination of software and hardware. For example, the AI module may include a RAN intelligent controller (RAN intelligent controller, RIC) module. For example, the AI module may be a near-real-time RIC or a non-real-time RIC.

In a possible design, the processor 1501 and/or the memory 1502 may further store data. The processor and the memory may be separately disposed, or may be integrated together.

In a possible design, the communication apparatus 1500 may further include a transceiver 1505 and/or an antenna 1506. The processor 1501 may also be referred to as a processing unit sometimes, and controls the communication apparatus 1500. The transceiver 1505 may also be referred to as a transceiver unit, a transceiver machine, a transceiver circuit, a transceiver, or the like sometimes, and is configured to implement a transceiver function of the communication apparatus through the antenna 1506.

In a possible design, the communication apparatus 1500 may further include one or more of the following components: a wireless communication module, an audio module, an external memory interface, an internal memory, a universal serial bus (universal serial bus, USB) interface, a power management module, an antenna, a speaker, a microphone, an input/output module, a sensor module, a motor, a camera, a display, or the like. It may be understood that, in some embodiments, the communication apparatus 1500 may include more or fewer components, or some components are integrated, or some components are split. These components may be implemented by hardware, software, or a combination of software and hardware.

The communication apparatus in the foregoing embodiment may be a terminal device (or a network device), or may be a circuit, or may be a chip used in a terminal device (or a network device) or another combined device, component, or the like having a terminal device (or a network device). When the communication apparatus is a terminal device (or a network device), the transceiver module may be a transceiver, and may include an antenna, a radio frequency circuit, and the like, and the processing module may be a processor, for example, a CPU. When the communication apparatus is a component having functions of a terminal device (or a network device), the transceiver module may be a radio frequency unit, and the processing module may be a processor. When the communication apparatus is a chip system, the communication apparatus may be an FPGA, a dedicated ASIC, a system on chip (system on chip, SoC), a CPU, a network processor (network processor, NP), a DSP, a microcontroller unit (microcontroller unit, MCU), a programmable controller (programmable logic device, PLD), or another integrated chip. The processing module may be a processor of the chip system. The transceiver module or a communication interface may be an input/output interface or an interface circuit of the chip system. For example, the interface circuit may be a code/data read/write interface circuit. The interface circuit may be configured to receive code instructions (the code instructions are stored in the memory, and may be directly read from the memory, or may be read from the memory through another device) and transmit the code instructions to the processor. The processor may be configured to run the code instructions to perform the method in the foregoing method embodiments. For another example, the interface circuit may alternatively be a signal transmission interface circuit between a communication processor and the transceiver machine.

An embodiment of this application further provides a communication system. Specifically, the communication system includes a network device and a terminal device. For example, the communication system includes a terminal device and a network device that are configured to implement related functions in FIG. 9. For details, refer to related descriptions in the foregoing method embodiments. Details are not described herein again.

An embodiment of this application further provides a computer-readable storage medium, including instructions. When the instructions are run on a computer, the computer is enabled to perform the method performed by the terminal device or the network device in FIG. 9.

An embodiment of this application further provides a computer program product, including instructions. When the instructions are run on a computer, the computer is enabled to perform the method performed by the terminal device or the network device in FIG. 9.

An embodiment of this application provides a chip system. The chip system includes a processor, may further include a memory, and is configured to implement functions of the terminal device or the network device in the foregoing methods. The chip system may include a chip, or may include a chip and another discrete component.

To implement the functions of the communication apparatuses in FIG. 14 and FIG. 15, an embodiment of this application further provides a chip, including a processor, configured to support the communication apparatus in implementing the functions of the terminal device or the network device in the foregoing method embodiments. In a possible design, the chip is connected to a memory, or the chip includes a memory. The memory is configured to store a computer program or instructions and data that are necessary for the communication apparatus.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, illustrative logical blocks (illustrative logical block) and steps (step) described with reference to embodiments disclosed in this specification can be implemented by electronic hardware, computer software, or a combination of computer software and electronic hardware. Whether these functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, that is, may be located in one place, or may be distributed on a plurality of network units. Some or all of the units may be selected according to actual requirements to achieve the objectives of the solutions of embodiments.

When the functions are implemented in a form of a software functional unit and sold or used as an independent product, the functions may be stored in a computer-readable storage medium. Based on this understanding, a part that essentially contributes to the technical solutions of this application or a part of the technical solutions may be embodied in a form of a software product. The computer software product is stored in a storage medium, and includes several instructions for enabling a computer device (which may be a personal computer, a server, a network device, or the like) to perform all or some steps of the methods in embodiments of this application. The foregoing storage medium includes any medium that can store program code, for example, a USB flash drive, a removable hard disk, a read-only memory (read-only memory, ROM), a RAM, a magnetic disk, or an optical disc.

It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1. A random access method, comprising:
receiving first resource information and second resource information, wherein the first resource information indicates a first random access resource set, the second resource information indicates a second random access resource set, a time domain resource corresponding to the first random access resource set is a subband full duplex SBFD time unit, and a time domain resource corresponding to the second random access resource set is a non-SBFD time unit;
determining a third random access resource based on the first resource information and the second resource information, wherein the third random access resource belongs to either the first random access resource set or the second random access resource set; and
sending a random access preamble by using the third random access resource.

2. The method according to claim 1, wherein determining the third random access resource based on the first resource information and the second resource information comprises:
when received power of at least one reference signal in a first reference signal set is greater than or equal to a corresponding threshold, determining the third random access resource from the first random access resource set; or
when received power of any reference signal in a first reference signal set is less than a corresponding threshold, determining the third random access resource from the second random access resource set, wherein
the first reference signal set is associated with the first random access resource set and/or the second random access resource set.

3. The method according to claim 1, wherein determining the third random access resource based on the first resource information and the second resource information comprises:
when received power of at least one reference signal in a first reference signal set is greater than or equal to a corresponding threshold, determining the third random access resource from either the first random access resource set or the second random access resource set; or
when received power of any reference signal in a first reference signal set is less than a corresponding threshold, determining the third random access resource from the second random access resource set, wherein
the first reference signal set is associated with the first random access resource set and/or the second random access resource set.

4. The method according to claim 2 or 3, wherein the method further comprises: selecting a first reference signal from the first reference signal set, wherein
determining the third random access resource from the first random access resource set comprises: determining the third random access resource from a random access resource corresponding to the first reference signal in the first random access resource set; and
determining the third random access resource from the second random access resource set comprises: determining the third random access resource from a random access resource corresponding to the first reference signal in the second random access resource set.

5. The method according to claim 1, wherein determining the third random access resource based on the first resource information and the second resource information comprises:
selecting a second reference signal from a first reference signal set; and
when received power of the second reference signal is greater than or equal to a threshold corresponding to the second reference signal, determining the third random access resource from a random access resource corresponding to the second reference signal in the first random access resource set; or
when received power of the second reference signal is less than a threshold corresponding to the second reference signal, determining the third random access resource from a random access resource corresponding to the second reference signal in the second random access resource set, wherein
the second reference signal set is associated with the first random access resource set and/or the second random access resource set.

6. The method according to claim 1, wherein determining the third random access resource based on the first resource information and the second resource information comprises:
selecting a second reference signal from a first reference signal set; and
when received power of the second reference signal is greater than or equal to a threshold corresponding to the second reference signal, determining the third random access resource from a random access resource corresponding to the second reference signal in either the first random access resource set or the second random access resource set; or
when received power of the second reference signal is less than a threshold corresponding to the second reference signal, determining the third random access resource from a random access resource corresponding to the second reference signal in the second random access resource set, wherein
the second reference signal set is associated with the first random access resource set and/or the second random access resource set.

7. The method according to any one of claims 2 to 6, wherein the method further comprises:
receiving first indication information, wherein the first indication information indicates Y thresholds, the Y thresholds have an association relationship with X reference signals in the first reference signal set, X is a positive integer, Y is a positive integer, and 1≤Y≤X; or the first indication information indicates an association relationship between X reference signals in the first reference signal set and Y thresholds, X is a positive integer, Y is a positive integer, and 1≤Y≤X.

8. The method according to claim 1, wherein the method further comprises:
receiving second indication information, wherein the second indication information indicates that the third random access resource belongs to either the first random access resource set or the second random access resource set.

9. The method according to claim 8, wherein the second indication information is carried in a first field contained in downlink control information DCI, wherein when the first field has a first value, the second indication information indicates that the third random access resource belongs to the first random access resource set; or when the first field has a second value, the second indication information indicates that the third random access resource belongs to the second random access resource set.

10. The method according to any one of claims 1 to 9, wherein
the first resource information comprises a frequency start position of a lowest random access channel occasion RO in the frequency domain in the first random access resource set and/or a quantity of frequency division multiplexing ROs in the first random access resource set; and
the second resource information comprises a frequency start position of a lowest RO in the frequency domain in the second random access resource set and/or a quantity of frequency division multiplexing ROs in the second random access resource set.

11. The method according to any one of claims 1 to 10, wherein
the first resource information comprises a first physical random access channel PRACH configuration index, wherein the first PRACH configuration index and a random access RA configuration table for time division duplex TDD spectrum are used to determine the time domain resource corresponding to the first random access resource set; or the first PRACH configuration index and an RA configuration table for frequency division duplex FDD spectrum are used to determine the time domain resource corresponding to the first random access resource set; and
the second resource information comprises a second PRACH configuration index, wherein the second PRACH configuration index and the RA configuration table for TDD spectrum are used to determine the time domain resource corresponding to the second random access resource set.

12. The method according to any one of claims 1 to 11, wherein
the first resource information further comprises first power information, and the first power information indicates information related to transmit power control for a random access preamble in the first random access resource set; and
the second resource information further comprises second power information, and the second power information indicates information related to transmit power control for a random access preamble in the second random access resource set, wherein
the information related to transmit power for the random access preamble comprises expected received power and/or a power ramping step.

13. A random access method, comprising:
sending first resource information and second resource information, wherein the first resource information indicates a first random access resource set, the second resource information indicates a second random access resource set, a time domain resource corresponding to the first random access resource set is a subband full duplex SBFD time unit, and a time domain resource corresponding to the second random access resource set is a non-SBFD time unit; and
detecting a random access preamble in the first random access resource set and/or the second random access resource set.

14. The method according to claim 13, wherein the method further comprises:
sending first indication information, wherein the first indication information indicates Y thresholds, the Y thresholds have an association relationship with X reference signals in a first reference signal set, X is a positive integer, Y is a positive integer, and 1≤Y≤X; or the first indication information indicates an association relationship between X reference signals in a first reference signal set and Y thresholds, X is a positive integer, Y is a positive integer, and 1≤Y≤X, wherein the first reference signal set is associated with the first random access resource set and/or the second random access resource set.

15. The method according to claim 13 or 14, wherein the method further comprises:
sending second indication information, wherein the second indication information indicates that the third random access resource belongs to either the first random access resource set or the second random access resource set.

16. The method according to any one of claims 13 to 15, wherein
the first resource information comprises a frequency start position of a lowest random access channel occasion RO in the frequency domain in the first random access resource set and/or a quantity of frequency division multiplexing ROs in the first random access resource set; and
the second resource information comprises a frequency start position of a lowest RO in the frequency domain in the second random access resource set and/or a quantity of frequency division multiplexing ROs in the second random access resource set.

17. The method according to any one of claims 13 to 16, wherein
the first resource information comprises a first physical random access channel PRACH configuration index, wherein the first PRACH configuration index and a random access RA configuration table for time division duplex TDD spectrum are used to determine the time domain resource corresponding to the first random access resource set; or the first PRACH configuration index and an RA configuration table for frequency division duplex FDD spectrum are used to determine the time domain resource corresponding to the first random access resource set; and
the second resource information comprises a second PRACH configuration index, wherein the second PRACH configuration index and the RA configuration table for TDD spectrum are used to determine the time domain resource corresponding to the second random access resource set.

18. The method according to any one of claims 13 to 17, wherein
the first resource information further comprises first power information, and the first power information indicates information related to transmit power control for a random access preamble in the first random access resource set; and
the second resource information further comprises second power information, and the second power information indicates information related to transmit power control for a random access preamble in the second random access resource set, wherein
the information related to transmit power for the random access preamble comprises expected received power and/or a power ramping step.

19. A communication apparatus, comprising:
a transceiver module, configured to receive first resource information and second resource information, wherein the first resource information indicates a first random access resource set, the second resource information indicates a second random access resource set, a time domain resource corresponding to the first random access resource set is a subband full duplex SBFD time unit, and a time domain resource corresponding to the second random access resource set is a non-SBFD time unit; and
a processing module, configured to determine a third random access resource based on the first resource information and the second resource information, wherein the third random access resource belongs to either the first random access resource set or the second random access resource set, wherein
the transceiver module is further configured to send a random access preamble by using the third random access resource.

20. The apparatus according to claim 19, wherein the processing module is specifically configured to:
when received power of at least one reference signal in a first reference signal set is greater than or equal to a corresponding threshold, determine the third random access resource from the first random access resource set; or
when received power of any reference signal in a first reference signal set is less than a corresponding threshold, determine the third random access resource from the second random access resource set, wherein
the first reference signal set is associated with the first random access resource set and/or the second random access resource set.

21. The apparatus according to claim 19, wherein the processing module is specifically configured to:
when received power of at least one reference signal in a first reference signal set is greater than or equal to a corresponding threshold, determine the third random access resource from either the first random access resource set or the second random access resource set; or
when received power of any reference signal in a first reference signal set is less than a corresponding threshold, determine the third random access resource from the second random access resource set, wherein
the first reference signal set is associated with the first random access resource set and/or the second random access resource set.

22. The apparatus according to claim 20 or 21, wherein the processing module is specifically configured to:
select a first reference signal from the first reference signal set; and
determine the third random access resource from a random access resource corresponding to the first reference signal in the first random access resource set; or
determine the third random access resource from a random access resource corresponding to the first reference signal in the second random access resource set.

23. The apparatus according to claim 19, wherein the processing module is specifically configured to:
select a second reference signal from a first reference signal set; and
when received power of the second reference signal is greater than or equal to a threshold corresponding to the second reference signal, determine the third random access resource from a random access resource corresponding to the second reference signal in the first random access resource set; or
when received power of the second reference signal is less than a threshold corresponding to the second reference signal, determine the third random access resource from a random access resource corresponding to the second reference signal in the second random access resource set, wherein
the second reference signal set is associated with the first random access resource set and/or the second random access resource set.

24. The apparatus according to claim 19, wherein the processing module is specifically configured to:
select a second reference signal from a first reference signal set; and
when received power of the second reference signal is greater than or equal to a threshold corresponding to the second reference signal, determine the third random access resource from a random access resource corresponding to the second reference signal in either the first random access resource set or the second random access resource set; or
when received power of the second reference signal is less than a threshold corresponding to the second reference signal, determine the third random access resource from a random access resource corresponding to the second reference signal in the second random access resource set, wherein
the second reference signal set is associated with the first random access resource set and/or the second random access resource set.

25. The apparatus according to any one of claims 20 to 24, wherein the transceiver module is further configured to:
receive first indication information, wherein the first indication information indicates Y thresholds, the Y thresholds have an association relationship with X reference signals in the first reference signal set, X is a positive integer, Y is a positive integer, and 1≤Y≤X; or the first indication information indicates an association relationship between X reference signals in the first reference signal set and Y thresholds, X is a positive integer, Y is a positive integer, and 1≤Y≤X.

26. The apparatus according to claim 19, wherein the transceiver module is further configured to:
receive second indication information, wherein the second indication information indicates that the third random access resource belongs to either the first random access resource set or the second random access resource set.

27. The apparatus according to claim 26, wherein the second indication information is carried in a first field contained in downlink control information DCI, wherein when the first field has a first value, the second indication information indicates that the third random access resource belongs to the first random access resource set; or when the first field has a second value, the second indication information indicates that the third random access resource belongs to the second random access resource set.

28. The apparatus according to any one of claims 19 to 27, wherein
the first resource information comprises a frequency start position of a lowest random access channel occasion RO in the frequency domain in the first random access resource set and/or a quantity of frequency division multiplexing ROs in the first random access resource set; and
the second resource information comprises a frequency start position of a lowest RO in the frequency domain in the second random access resource set and/or a quantity of frequency division multiplexing ROs in the second random access resource set.

29. The apparatus according to any one of claims 19 to 28, wherein
the first resource information comprises a first physical random access channel PRACH configuration index, wherein the first PRACH configuration index and a random access RA configuration table for time division duplex TDD spectrum are used to determine the time domain resource corresponding to the first random access resource set; or the first PRACH configuration index and an RA configuration table for frequency division duplex FDD spectrum are used to determine the time domain resource corresponding to the first random access resource set; and
the second resource information comprises a second PRACH configuration index, wherein the second PRACH configuration index and the RA configuration table for TDD spectrum are used to determine the time domain resource corresponding to the second random access resource set.

30. The apparatus according to any one of claims 19 to 29, wherein
the first resource information further comprises first power information, and the first power information indicates information related to transmit power control for a random access preamble in the first random access resource set; and
the second resource information further comprises second power information, and the second power information indicates information related to transmit power control for a random access preamble in the second random access resource set, wherein
the information related to transmit power for the random access preamble comprises expected received power and/or a power ramping step.

31. A communication apparatus, comprising:
a transceiver module, configured to send first resource information and second resource information, wherein the first resource information indicates a first random access resource set, the second resource information indicates a second random access resource set, a time domain resource corresponding to the first random access resource set is a subband full duplex SBFD time unit, and a time domain resource corresponding to the second random access resource set is a non-SBFD time unit; and
a processing module, configured to determine the first random access resource set and/or the second random access resource set, wherein
the transceiver module is further configured to detect a random access preamble in the first random access resource set and/or the second random access resource set.

32. The apparatus according to claim 31, wherein the transceiver module is further configured to:
send first indication information, wherein the first indication information indicates Y thresholds, the Y thresholds have an association relationship with X reference signals in a first reference signal set, X is a positive integer, Y is a positive integer, and 1≤Y≤X; or the first indication information indicates an association relationship between X reference signals in a first reference signal set and Y thresholds, X is a positive integer, Y is a positive integer, and 1≤Y≤X, wherein the first reference signal set is associated with the first random access resource set and/or the second random access resource set.

33. The apparatus according to claim 31 or 32, wherein the apparatus further comprises:
send second indication information, wherein the second indication information indicates that the third random access resource belongs to either the first random access resource set or the second random access resource set.

34. The apparatus according to any one of claims 31 to 33, wherein
the first resource information comprises a frequency start position of a lowest random access channel occasion RO in the frequency domain in the first random access resource set and/or a quantity of frequency division multiplexing ROs in the first random access resource set; and
the second resource information comprises a frequency start position of a lowest RO in the frequency domain in the second random access resource set and/or a quantity of frequency division multiplexing ROs in the second random access resource set.

35. The apparatus according to any one of claims 31 to 34, wherein
the first resource information comprises a first physical random access channel PRACH configuration index, wherein the first PRACH configuration index and a random access RA configuration table for time division duplex TDD spectrum are used to determine the time domain resource corresponding to the first random access resource set; or the first PRACH configuration index and an RA configuration table for frequency division duplex FDD spectrum are used to determine the time domain resource corresponding to the first random access resource set; and
the second resource information comprises a second PRACH configuration index, wherein the second PRACH configuration index and the RA configuration table for TDD spectrum are used to determine the time domain resource corresponding to the second random access resource set.

36. The apparatus according to any one of claims 31 to 35, wherein
the first resource information further comprises first power information, and the first power information indicates information related to transmit power control for a random access preamble in the first random access resource set; and
the second resource information further comprises second power information, and the second power information indicates information related to transmit power control for a random access preamble in the second random access resource set, wherein
the information related to transmit power for the random access preamble comprises expected received power and/or a power ramping step.

37. A communication apparatus, wherein the communication apparatus comprises a processor and a memory, the memory is configured to store a computer program, and the processor is configured to execute the computer program stored in the memory, so that the method according to any one of claims 1 to 12 is performed by the communication apparatus, or the method according to any one of claims 13 to 18 is performed by the communication apparatus.

38. A communication system, wherein the communication system comprises:
a network device, configured to send first resource information and second resource information, wherein the first resource information indicates a first random access resource set, the second resource information indicates a second random access resource set, a time domain resource corresponding to the first random access resource set is a subband full duplex SBFD time unit, and a time domain resource corresponding to the second random access resource set is a non-SBFD time unit; and
a terminal device, configured to: determine a third random access resource based on the first resource information and the second resource information, wherein the third random access resource belongs to either the first random access resource set or the second random access resource set; and send a random access preamble by using the third random access resource.

39. A chip system, wherein the chip system comprises:
a processor and an interface, wherein the processor is configured to invoke instructions from the interface and run the instructions, and when the processor executes the instructions, the method according to any one of claims 1 to 12 is implemented, or the method according to any one of claims 13 to 18 is implemented.

40. A computer-readable storage medium, wherein the computer-readable storage medium is configured to store a computer program, and when the computer program is run on a computer, the method according to any one of claims 1 to 12 is performed by the computer, or the method according to any one of claims 13 to 18 is performed by the computer.

41. A computer program product, wherein the computer program product comprises a computer program, and when the computer program is run on a computer, the method according to any one of claims 1 to 12 is performed by the computer, or the method according to any one of claims 13 to 18 is performed by the computer.
